# EUROPEAN PATENT APPLICATION

(11) **EP 4 738 748 A1**
(43) Date of publication of application: **06.05.2026**
(21) Application number: 23942911.1
(22) Date of filing: 29.06.2023
(51) Int. Cl.: H04L 5/00

(54) **DETERMINATION METHOD AND APPARATUS, COMMUNICATION DEVICE, COMMUNICATION SYSTEM, AND STORAGE MEDIUM**

(71) Applicant: Beijing Xiaomi Mobile Software Co., Ltd., Beijing 100085 (CN)
(72) Inventor: GAO, Xueyuan, Beijing 100085 (CN)
(74) Representative: Gunzelmann, Rainer
(86) International application number: PCT/CN2023/104292
(87) International publication number: WO 2025/000403

(57) **Abstract**

The present disclosure provides a determination method and apparatus, a device, and a storage medium. The method comprises: when a transmission scheme is that a physical uplink shared channel (PUSCH) performs multi-transmission reception point (MTRP) transmission in an uplink simultaneous transmission across multi-antenna panels (STxMP) configuration scenario, on the basis of at least one of a transmission mode, a maximum number of transmission layers, and a maximum number of phase tracking reference signal (PTRS) ports, determining a bit width and/or an indication method of a first DCI indicator field, wherein the DCI indicator field is used for indicating an association relationship between ports. The embodiments of the present disclosure provide a method for "how to determine a bit width and/or an indication method of a DCI indicator field", so that when a terminal and a network device perform MTRP transmission in an uplink STxMP configuration scenario, a bit width and/or an indication method of a DCI indicator field may be determined, thereby implementing successful transmission and parsing of the DCI indicator field, and ensuring that an association relationship between ports may be successfully indicated.

## Description

### TECHNICAL FIELD

The present disclosure relates to the field of communication technologies, and in particular relates to a determination method, an apparatus, a communication device, a communication system, and a storage medium.

### BACKGROUND

In a communication system, a terminal usually perform a multi-transmission reception point (MTRP) transmission. During the MTRP transmission, a network device usually needs to indicate the association relationship between a demodulation reference signal (DMRS) port and a phase tracking reference signal (PTRS) port to the terminal via an indication field in a downlink control information (DCI) signaling. Among them, how to determine the bit width of the indication field in the MTRP transmission, and how to determine an indication manner of the indication field when the indication field indicates the association relationship between the DMRS port and the PTRS port, are technical problems that urgently need to be solved.

### SUMMARY

The present disclosure provides a determination method, an apparatus, a communication device, a communication system, and a storage medium.

According to a first aspect of embodiments of the present disclosure, a determination method is provided, which includes: determining a bit width and/or an indication manner of a first DCI indication field based on at least one of a transmission mode, a maximum number of transmission layers, or a maximum number of PTRS ports in a case where a transmission scheme is performing, by a physical uplink shared channel (PUSCH), an MTRP transmission in an uplink simultaneous transmission across multiple panels (STxMP) configuration scenario, where the DCI indication field indicates an association relationship between ports.

According to a second aspect of embodiments of the present disclosure, a determination method is provided, which includes: determining, by a network device, a bit width and/or an indication manner of a first DCI indication field based on at least one of a transmission mode, a maximum number of transmission layers, or a maximum number of PTRS ports in a case where a transmission scheme is performing, by a PUSCH, an MTRP transmission in an uplink STxMP configuration scenario, where the DCI indication field indicates an association relationship between ports; and determining, by a terminal, a bit width and/or an indication manner of a first DCI indication field based on at least one of a transmission mode, a maximum number of transmission layers, or a maximum number of PTRS ports in a case where a transmission scheme is performing, by a PUSCH, an MTRP transmission in an uplink STxMP configuration scenario, where the DCI indication field indicates an association relationship between ports.

According to a third aspect of embodiments of the present disclosure, an apparatus is provided, which includes: a determination module configured to determine a bit width and/or an indication manner of a first DCI indication field based on at least one of a transmission mode, a maximum number of transmission layers, or a maximum number of PTRS ports in a case where a transmission scheme is performing, by a PUSCH, an MTRP transmission in an uplink STxMP configuration scenario, where the DCI indication field indicates an association relationship between ports.

According to a fourth aspect of embodiments of the present disclosure, a communication device is provided, which includes one or more processors, where the one or more processors are configured to invoke instructions to cause the communication device to perform the determination method according to the first aspect.

According to a fifth aspect of embodiments of the present disclosure, a communication system is provided, which includes a terminal configured to implement the determination method according to the first aspect, and a network device configured to implement the determination method according to the first aspect.

According to a sixth aspect of embodiments of the present disclosure, a storage medium is provided, which has stored therein instructions that, when executed on a communication device, cause the communication device to perform the determination method according to the first aspect.

### BRIEF DESCRIPTION OF THE DRAWINGS

These and/or additional aspects and advantages of the present disclosure will become apparent and readily appreciated from the following descriptions of the embodiments made with reference to the drawings, in which:
FIG. 1 is a schematic diagram of the architecture of some communication systems provided in an embodiment of the present disclosure;
FIG. 2A is a schematic diagram of the interaction flow of a determination method provided in an embodiment of the present disclosure;
FIGS. 3A to 3B are schematic flowcharts of a determination method provided in yet another embodiment of the present disclosure;
FIGS. 4A to 4B are schematic flowcharts of a determination method provided in yet another embodiment of the present disclosure;
FIG. 5 is a schematic flowchart of a determination method provided in still another embodiment of the present disclosure;
FIG. 6A is a schematic block diagram of a communication device provided in an embodiment of the present disclosure;
FIG. 7A is a schematic block diagram of a communication device provided in an embodiment of the present disclosure;
FIG. 7B is a schematic block diagram of a chip provided in an embodiment of the present disclosure.

### DETAILED DESCRIPTION

Embodiments of the present disclosure provide a determination method, an apparatus, a communication device, a communication system, and a storage medium.

In a first aspect, embodiments of the present disclosure provide a determination method, which includes: determining a bit width and/or an indication manner of a first DCI indication field based on at least one of a transmission mode, a maximum number of transmission layers, or a maximum number of PTRS ports in a case where a transmission scheme is performing, by a PUSCH, an MTRP transmission in an uplink STxMP configuration scenario, where the DCI indication field indicates an association relationship between ports.

In the above embodiments, when the PUSCH performs the MTRP transmission in the STxMP configuration scenario, the terminal or the network device may determine the bit width and/or the indication manner of the DCI indication field based on at least one of the transmission mode, the maximum number of transmission layers, or the maximum number of PTRS ports, where the DCI indication field indicates the association relationship between ports. Therefore, the embodiments of the present disclosure provide a method for "determining a bit width and/or an indication manner of a DCI indication field", so that the terminal and the network device may determine the bit width and/or the indication manner of the DCI indication field when the terminal and the network device perform the MTRP transmission in the uplink STxMP configuration scenario, respectively, thereby achieving the successful transmission and parsing of the DCI indication field and ensuring that the association relationship between ports may be successfully indicated.

In combination with some embodiments of the first aspect, in some embodiments, the MTRP transmission in the STxMP configuration scenario includes simultaneously performing, by two antenna panels of a terminal, PUSCH transmissions to two different transmission reception point (TRP) directions, where the PUSCH transmissions in different TRP directions are associated with different sets of sounding reference signal (SRS) resources and different transmission configuration indication states (TCI states).

In combination with some embodiments of the first aspect, in some embodiments, the transmission mode includes a space division multiplexing (SDM) transmission or a single frequency network (SFN) transmission.

In combination with some embodiments of the first aspect, in some embodiments, the association relationship between the ports includes an association relationship between a PTRS port and a DMRS port.

In combination with some embodiments of the first aspect, in some embodiments, the method further includes: determining an execution of the MTRP transmission based on an SRS resource set indicator (SRI) field in a DCI signaling.

In combination with some embodiments of the first aspect, in some embodiments, the method further includes: determining the transmission mode of the MTRP transmission to be an SDM transmission or an SFN transmission based on a radio resource control (RRC) signaling.

In the above embodiments, it is usually first determined whether the transmission is an MTRP transmission and whether the transmission mode of the MTRP transmission is an SDM transmission or an SFN transmission. Therefore, when the transmission is an MTRP transmission, the bit width and/or the indication manner of the corresponding DCI indication field may be subsequently determined based on the transmission mode of the MTRP transmission, thereby realizing the successful transmission and parsing of the DCI indication field and ensuring that the association relationship between ports may be successfully indicated.

In combination with some embodiments of the first aspect, in some embodiments, the maximum number of transmission layers is the maximum number of transmission layers corresponding to each SRS resource set, each TRP, each antenna panel, or each TCI state; and the maximum number of PTRS ports is the maximum number of PTRS ports sent by a terminal, where the number of PTRS ports corresponding to different SRS resource sets, different TRPs, different antenna panels, or different TCI states from the terminal is the same.

In combination with some embodiments of the first aspect, in some embodiments, in a case where the transmission mode is an SDM transmission, the maximum number of PTRS ports is 2, the actual number of PTRS ports sent by a terminal is 2, each SRS resource set, each TRP, each antenna panel, or each TCI state corresponds to one PTRS port, and different SRS resource sets, different TRPs, different antenna panels, or different TCI states correspond to different PTRS ports for transmissions.

In combination with some embodiments of the first aspect, in some embodiments, determining the bit width and/or the indication manner of the DCI indication field based on at least one of the transmission mode, the maximum number of transmission layers, or the maximum number of PTRS ports includes: in a case where the transmission mode is an SDM transmission and the maximum number of transmission layers configured for the SDM transmission is 1, an actual number of PTRS ports sent by a terminal being 2, determining the bit width and/or the indication manner of the DCI indication field being any one of: the bit width of the DCI indication field being 0 bits; the bit width of the DCI indication field being 2 bits, a most significant bit (MSB) of the DCI indication field indicating a DMRS port associated with a PTRS port 0 corresponding to a first SRS resource set, a first TRP, a first antenna panel, or a first TCI state in the STxMP configuration scenario; a least significant bit (LSB) of the DCI indication field indicating a DMRS port associated with a PTRS port 1 corresponding to a second SRS resource set, a second TRP, a second antenna panel, or a second TCI state in the STxMP configuration scenario; or the bit width of the DCI indication field being 1 bit, the DCI indication field indicating an DMRS port associated with a PTRS port corresponding to an SRS resource set, a TRP, an antenna panel, or a TCI state in the STxMP configuration scenario.

In the above embodiments, for the case where the transmission mode is the SDM transmission and the maximum number of transmission layers configured for the SDM transmission is 1, a method for "determining a bit width and/or an indication manner of a DCI indication field" is provided, so that the terminal and the network device may determine the bit width and/or the indication manner of the DCI indication field, respectively, when the transmission mode is the SDM transmission and the maximum number of transmission layers configured for the SDM transmission is 1, thereby realizing the successful transmission and parsing of the DCI indication field and ensuring that the association relationship between ports may be successfully indicated. Furthermore, in some embodiments, the DCI indication field may be 0 bits, which may save signaling overheads and conserve resources.

In combination with some embodiments of the first aspect, in some embodiments, determining the bit width and/or the indication manner of the DCI indication field based on at least one of the transmission mode, the maximum number of transmission layers, or the maximum number of PTRS ports includes: in a case where the transmission mode is an SDM transmission and the maximum number of transmission layers configured for the SDM transmission is 2, an actual number of PTRS ports sent by a terminal being 2, determining an actual number of transmission layers corresponding to each SRS resource set, each TRP, each antenna panel, or each TCI state; in a case where the actual number of transmission layers corresponding to each SRS resource set, each TRP, each antenna panel, or each TCI state is 2, determining the bit width of the DCI indication field to be 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 1 corresponding to a second SRS resource set, a second TRP, a second antenna panel, or a second TCI state in the STxMP configuration scenario; in a case where the actual number of transmission layers corresponding to each SRS resource set, each TRP, each antenna panel, or each TCI state is 1, determining the bit width and/or the indication manner of the DCI indication field being any one of: the bit width of the DCI indication field being 0 bits; the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 1 corresponding to a second SRS resource set, a second TRP, a second antenna panel, or a second TCI state in the STxMP configuration scenario; or the bit width of the DCI indication field being 1 bit, the DCI indication field indicating a DMRS port associated with a PTRS port corresponding to an SRS resource set, a TRP, an antenna panel, or a TCI state in the STxMP configuration scenario; in a case where the actual number of transmission layers corresponding to a first SRS resource set, a first TRP, a first antenna panel, or a first TCI state is 1, and an actual number of transmission layers corresponding to a second SRS resource set, a second TRP, a second antenna panel, or a second TCI state is 2; or in a case where an actual number of transmission layers corresponding to a first SRS resource set, a first TRP, a first antenna panel, or a first TCI state is 2, and an actual number of transmission layers corresponding to a second SRS resource set, a second TRP, a second antenna panel, or a second TCI state is 1, determining the bit width and/or the indication manner of the DCI indication field being any one of: the bit width of the DCI indication field being 2 bits, an MSB of the DCI indication field indicating a DMRS port associated with a PTRS port 0 corresponding to the first SRS resource set, the first TRP, the first antenna panel, or the first TCI state in the STxMP configuration scenario, an LSB of the DCI indication field indicating a DMRS port associated with a PTRS port 1 corresponding to the second SRS resource set, the second TRP, the second antenna panel, or the second TCI state in the STxMP configuration scenario; or the bit width of the DCI indication field being 1 bit, the DCI indication field indicating a DMRS port associated with a PTRS port corresponding to an SRS resource set with an actual number of transmission layers of 2, a TRP with an actual number of transmission layers of 2, an antenna panel with an actual number of transmission layers of 2, or a TCI state with an actual number of transmission layers of 2.

In the above embodiments, for the case where the transmission mode is the SDM transmission and the maximum number of transmission layers configured for the SDM transmission is 2, a method for "determining a bit width and/or an indication manner of a DCI indication field" is provided, so that the terminal and the network device may determine the bit width and/or the indication manner of the DCI indication field, respectively, when the transmission mode is the SDM transmission and the maximum number of transmission layers configured for the SDM transmission is 2, thereby achieving the successful transmission and parsing of the DCI indication field and ensuring that the association relationship between ports may be successfully indicated.

In combination with some embodiments of the first aspect, in some embodiments, in a case where the transmission mode is an SFN transmission, the number of PTRS ports corresponding to different SRS resource sets, different TRPs, different antenna panels, or different TCI states is the same, and the same PTRS port corresponding to different SRS resource sets, different TRPs, different antenna panels, or different TCI states is associated with the same DMRS port or different DMRS ports.

In combination with some embodiments of the first aspect, in some embodiments, determining the bit width and/or the indication manner of the DCI indication field based on at least one of the transmission mode, the maximum number of transmission layers, or the maximum number of PTRS ports includes: in a case where the transmission mode is an SFN transmission, the maximum number of transmission layers configured for the SFN transmission is 1, and the maximum number of PTRS ports configured for the SFN transmission is 1, an actual number of PTRS ports sent by a terminal being 1, determining the bit width and/or the indication manner of the DCI indication field being any one of: the bit width of the DCI indication field being 0 bits; the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 0 corresponding to a second SRS resource set, a second TRP, a second antenna panel, or a second TCI state in the STxMP configuration scenario; or the bit width of the DCI indication field being 1 bit, the DCI indication field indicating a DMRS port associated with a PTRS port corresponding to an SRS resource set, a TRP, an antenna panel, or a TCI state in the STxMP configuration scenario.

In the above embodiments, for the case where "the transmission mode is the SFN transmission, the maximum number of transmission layers configured for the SFN transmission is 1, and the maximum number of PTRS ports configured for the SFN transmission is 1", a method for "determining a bit width and/or an indication manner of a DCI indication field" is provided, so that the terminal and the network device may determine the bit width and/or the indication manner of the DCI indication field, respectively, when the transmission mode is the SFN transmission, the maximum number of transmission layers configured for the SFN transmission is 1, and the maximum number of PTRS ports configured for the SFN transmission is 1, thereby achieving the successful transmission and parsing of the DCI indication field and ensuring that the association relationship between ports may be successfully indicated.

In combination with some embodiments of the first aspect, in some embodiments, determining the bit width and/or the indication manner of the DCI indication field based on at least one of the transmission mode, the maximum number of transmission layers, or the maximum number of PTRS ports includes: in a case where the transmission mode is an SFN transmission, the maximum number of transmission layers configured for the SFN transmission is 2, and the maximum number of PTRS ports configured for the SFN transmission is 1, an actual number of PTRS ports sent by a terminal being 1, determining an actual number of transmission layers for each SRS resource set, each TRP, each antenna panel, or each TCI state; in a case where the actual number of transmission layers corresponding to each SRS resource set, each TRP, each antenna panel, or each TCI state is 1, determining the bit width and/or the indication manner of the DCI indication field being any one of: the bit width of the DCI indication field being 0 bits; the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 0 corresponding to a second SRS resource set, a second TRP, a second antenna panel, or a second TCI state in the STxMP configuration scenario; or the bit width of the DCI indication field being 1 bit, the DCI indication field indicating a DMRS port associated with a PTRS port corresponding to an SRS resource set, a TRP, an antenna panel, or a TCI state in the STxMP configuration scenario; in a case where the actual number of transmission layers corresponding to each SRS resource set, each TRP, each antenna panel, or each TCI state is 2, and the same PTRS port corresponding to different SRS resource sets, different TRPs, different antenna panels, or different TCI states is associated with the same DMRS port, determining the bit width and/or the indication manner of the DCI indication field being any one of: the bit width of the DCI indication field being 1 bit, the DCI indication field indicating a DMRS port associated with a PTRS port corresponding to an SRS resource set, a TRP, an antenna panel, or a TCI state in the STxMP configuration scenario; or the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 0 corresponding to a second SRS resource set, a second TRP, a second antenna panel, or a second TCI state in the STxMP configuration scenario.

In combination with some embodiments of the first aspect, in some embodiments, determining the bit width and/or the indication manner of the DCI indication field based on at least one of the transmission mode, the maximum number of transmission layers, or the maximum number of PTRS ports includes: in a case where the transmission mode is the SFN transmission, the maximum number of transmission layers configured for the SFN transmission is 2, and the maximum number of PTRS ports configured for the SFN transmission is 1, the actual number of PTRS ports sent by the terminal being 1, determining an actual number of transmission layers corresponding to each SRS resource set, each TRP, each antenna panel, or each TCI state; and in a case where the actual number of transmission layers corresponding to each SRS resource set, each TRP, each antenna panel, or each TCI state is 2, and the same PTRS port corresponding to different SRS resource sets, different TRPs, different antenna panels, or different TCI states is associated with different DMRS ports, determining the bit width and/or the indication manner of the DCI indication field being any one of: the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating another DMRS port associated with the PTRS port 0 corresponding to a second SRS resource set, a second TRP, a second antenna panel, or a second TCI state in the STxMP configuration scenario; or the bit width of the DCI indication field being 1 bit, the DCI indication field indicating a DMRS port associated with a PTRS port corresponding to an SRS resource set, a TRP, an antenna panel, or a TCI state in the STxMP configuration scenario.

In the above embodiments, for the case where "the transmission mode is the SFN transmission, the maximum number of transmission layers configured for the SFN transmission is 2, and the maximum number of PTRS ports configured for the SFN transmission is 1", a method for "determining a bit width and/or an indication manner of a DCI indication field" is provided, so that the terminal and the network device may determine the bit width and/or the indication manner of the DCI indication field, respectively, when the transmission mode is the SFN transmission, the maximum number of transmission layers configured for the SFN transmission is 2, and the maximum number of PTRS ports configured for the SFN transmission is 1, thereby achieving the successful transmission and parsing of the DCI indication field and ensuring that the association relationship between ports may be successfully indicated.

In combination with some embodiments of the first aspect, in some embodiments, determining the bit width and/or the indication manner of the DCI indication field based on at least one of the transmission mode, the maximum number of transmission layers, or the maximum number of PTRS ports includes: in a case where the transmission mode is an SFN transmission, the maximum number of transmission layers configured for the SFN transmission is 2, and the maximum number of PTRS ports configured for the SFN transmission is 2, determining an actual number of PTRS ports sent by a terminal; in a case where the actual number of PTRS ports sent by the terminal is 1, determining an actual number of transmission layers for each SRS resource set, each TRP, each antenna panel, or each TCI state; in a case where the actual number of transmission layers corresponding to each SRS resource set, each TRP, each antenna panel, or each TCI state is 1, determining the bit width and/or the indication manner of the DCI indication field being any one of: the bit width of the DCI indication field being 0 bits; the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 0 corresponding to a second SRS resource set, a second TRP, a second antenna panel, or a second TCI state in the STxMP configuration scenario; or the bit width of the DCI indication field being 1 bit, the DCI indication field indicating a DMRS port associated with a PTRS port 0 corresponding to an SRS resource set, a TRP, an antenna panel, or a TCI state in the STxMP configuration scenario; in a case where an actual number of transmission layers corresponding to each SRS resource set, each TRP, each antenna panel, or each TCI state is 2, and the same PTRS port corresponding to different SRS resource sets, different TRPs, different antenna panels, or different TCI states is associated with the same DMRS port, determining the bit width and/or the indication manner of the DCI indication field being any one of: the bit width of the DCI indication field being 1 bit, the DCI indication field indicating a DMRS port associated with a PTRS port corresponding to an SRS resource set, a TRP, an antenna panel, or a TCI state in the STxMP configuration scenario; or the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 0 corresponding to a second SRS resource set, a second TRP, a second antenna panel, or a second TCI state in the STxMP configuration scenario; in a case where the actual number of transmission layers corresponding to each SRS resource set, each TRP, each antenna panel, or each TCI state is 2, and the same PTRS port corresponding to different SRS resource sets, different TRPs, different antenna panels, or different TCI states is associated with different DMRS ports, determining the bit width and/or the indication manner of the DCI indication field being any one of: the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating another DMRS port associated with the PTRS port 0 corresponding to a second SRS resource set, a second TRP, a second antenna panel, or a second TCI state in the STxMP configuration scenario; or the bit width of the DCI indication field being 1 bit, the DCI indication field indicating a DMRS port associated with a PTRS port corresponding to an SRS resource set, a TRP, an antenna panel, or a TCI state in the STxMP configuration scenario.

In combination with some embodiments of the first aspect, in some embodiments, determining the bit width and/or the indication manner of the DCI indication field based on at least one of the transmission mode, the maximum number of transmission layers, or the maximum number of PTRS ports includes: in a case where the transmission mode is an SFN transmission, the maximum number of transmission layers configured for the SFN transmission is 2, and the maximum number of PTRS ports configured for the SFN transmission is 2, determining an actual number of PTRS ports sent by a terminal; in a case where the actual number of PTRS ports sent by the terminal is 2, and the same PTRS port corresponding to different SRS resource sets, different TRPs, different antenna panels, or different TCI states is associated with the same DMRS port, determining the bit width and/or the indication manner of the DCI indication field being any one of: the bit width of the DCI indication field being 1 bit, the DCI indication field indicating a DMRS port associated with a PTRS port corresponding to an SRS resource set, a TRP, an antenna panel, or a TCI state in the STxMP configuration scenario; the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 1 corresponding to the first SRS resource set, the first TRP, the first antenna panel, or the first TCI state in the STxMP configuration scenario; the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 0 corresponding to a second SRS resource set, a second TRP, a second antenna panel, or a second TCI state in the STxMP configuration scenario; or the bit width of the DCI indication field being 4 bits, first two bits of the DCI indication field indicating DMRS ports associated with two PTRS ports corresponding to a first SRS resource set, a first TRP, a first antenna panel, or a first TCI state in the STxMP configuration scenario; last two bits of the DCI indication field indicating DMRS ports associated with two PTRS ports corresponding to a second SRS resource set, a second TRP, a second antenna panel, or a second TCI state in the STxMP configuration scenario.

In combination with some embodiments of the first aspect, in some embodiments, determining the bit width and/or the indication manner of the DCI indication field based on at least one of the transmission mode, the maximum number of transmission layers, or the maximum number of PTRS ports includes: in a case where the transmission mode is an SFN transmission, the maximum number of transmission layers configured for the SFN transmission is 2, and the maximum number of PTRS ports configured for the SFN transmission is 2, determining an actual number of PTRS ports sent by a terminal; in a case where the actual number of PTRS ports sent by the terminal is 2, and the same PTRS port corresponding to different SRS resource sets, different TRPs, different antenna panels, or different TCI states is associated with different DMRS ports, determining the bit width and/or the indication manner of the DCI indication field being any one of: the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 0 corresponding to a second SRS resource set, a second TRP, a second antenna panel, or a second TCI state in the STxMP configuration scenario; or the bit width of the DCI indication field being 4 bits, first two bits of the DCI indication field indicating DMRS ports associated with two PTRS ports corresponding to a first SRS resource set, a first TRP, a first antenna panel, or a first TCI state in the STxMP configuration scenario; last two bits of the DCI indication field indicating DMRS ports associated with two PTRS ports corresponding to a second SRS resource set, a second TRP, a second antenna panel, or a second TCI state in the STxMP configuration scenario.

In the above embodiments, for the case where "the transmission mode is the SFN transmission, the maximum number of transmission layers configured for the SFN transmission is 2, and the maximum number of PTRS ports configured for the SFN transmission is 2", a method for "determining a bit width and/or an indication manner of a DCI indication field" is provided, so that the terminal and the network device may determine the bit width and/or the indication manner of the DCI indication field, respectively, when the transmission mode is the SFN transmission, the maximum number of transmission layers configured for the SFN transmission is 2, and the maximum number of PTRS ports configured for the SFN transmission is 2, thereby achieving the successful transmission and parsing of the DCI indication field and ensuring that the association relationship between ports may be successfully indicated.

In combination with some embodiments of the first aspect, in some embodiments, determining the actual number of PTRS ports sent by the terminal includes: determining a target SRS resource set, a target TRP, a target antenna panel, or a target TCI state from two SRS resource sets, two TRPs, two antenna panels, or two TCI states based on at least one of a predefined rule, a network configuration, or a network indication; determining the actual number of PTRS ports for the target SRS resource set, the target TRP, the target antenna panel, or the target TCI state as the actual number of PTRS ports sent by the terminal.

In combination with some embodiments of the first aspect, in some embodiments, the method further includes: in a case where the SFN transmission is performed based on a codebook, determining the actual number of PTRS ports for the target SRS resource set, the target TRP, the target antenna panel, or the target TCI state based on a transmitted precoding matrix indicator (TPMI) configured by a network device for the target SRS resource set, the target TRP, the target antenna panel, or the target TCI state; and in a case where the SFN transmission is performed based on a non-codebook, determining the actual number of PTRS ports for the target SRS resource set, the target TRP, the target antenna panel, or the target TCI state based on a PTRS index indicated by an SRI field corresponding to the target SRS resource set, the target TRP, the target antenna panel, or the target TCI state in a DCI signaling.

In the above embodiments, a method for "determining an actual number of PTRS ports sent by a terminal" is provided, so that the terminal and the network device may determine the actual number of PTRS ports sent by the terminal, respectively, and determine the bit width and/or the indication manner of the DCI indication field based on the determined actual number of PTRS ports sent by the terminal, respectively, thereby achieving the successful transmission and parsing of the DCI indication field and ensuring that the association relationship between ports may be successfully indicated.

In a second aspect, embodiments of the present disclosure provide a determination method, which performed by a communication system, the communication system including a terminal and a network device, the method including: determining, by the network device, a bit width and/or an indication manner of a first DCI indication field based on at least one of a transmission mode, a maximum number of transmission layers, or a maximum number of PTRS ports in a case where a transmission scheme is performing, by a PUSCH, an MTRP transmission in an uplink STxMP configuration scenario, where the DCI indication field indicates an association relationship between ports; and determining, by the terminal, a bit width and/or an indication manner of a first DCI indication field based on at least one of a transmission mode, a maximum number of transmission layers, or a maximum number of PTRS ports in a case where a transmission scheme is performing, by a PUSCH, an MTRP transmission in an uplink STxMP configuration scenario, where the DCI indication field indicates an association relationship between ports.

In a third aspect, embodiments of the present disclosure provide an apparatus, which includes: a determination module configured to determine a bit width and/or an indication manner of a first DCI indication field based on at least one of a transmission mode, a maximum number of transmission layers, or a maximum number of PTRS ports in a case where a transmission scheme is performing, by a PUSCH, an MTRP transmission in an uplink STxMP configuration scenario, where the DCI indication field indicates an association relationship between ports.

In combination with some embodiments of the third aspect, in some embodiments, the MTRP transmission in the STxMP configuration scenario includes simultaneously performing, by two antenna panels of a terminal, PUSCH transmissions to two different TRP directions, where the PUSCH transmissions in different TRP directions are associated with different sets of SRS resources and different TCI states.

In combination with some embodiments of the third aspect, in some embodiments, the transmission mode includes an SDM transmission or an SFN transmission.

In combination with some embodiments of the third aspect, in some embodiments, the association relationship between the ports includes an association relationship between a PTRS port and a DMRS port.

In combination with some embodiments of the third aspect, in some embodiments, the apparatus is further configured to determine an execution of the MTRP transmission based on an SRI field in a DCI signaling.

In combination with some embodiments of the third aspect, in some embodiments, the transmission mode of the MTRP transmission is determined to be an SDM transmission or an SFN transmission based on an RRC signaling.

In combination with some embodiments of the third aspect, in some embodiments, the maximum number of transmission layers is the maximum number of transmission layers corresponding to each SRS resource set, each TRP, each antenna panel, or each TCI state; and the maximum number of PTRS ports is the maximum number of PTRS ports sent by a terminal, where the number of PTRS ports corresponding to different SRS resource sets, different TRPs, different antenna panels, or different TCI states from the terminal is the same.

In combination with some embodiments of the third aspect, in some embodiments, in a case where the transmission mode is an SDM transmission, the maximum number of PTRS ports is 2, the actual number of PTRS ports sent by a terminal is 2, each SRS resource set, each TRP, each antenna panel, or each TCI state corresponds to one PTRS port, and different SRS resource sets, different TRPs, different antenna panels, or different TCI states correspond to different PTRS ports for transmissions.

In combination with some embodiments of the third aspect, in some embodiments, the determination module is further configured to: in a case where the transmission mode is an SDM transmission and the maximum number of transmission layers configured for the SDM transmission is 1, an actual number of PTRS ports sent by a terminal being 2, determine the bit width and/or the indication manner of the DCI indication field being any one of: the bit width of the DCI indication field being 0 bits; the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 1 corresponding to a second SRS resource set, a second TRP, a second antenna panel, or a second TCI state in the STxMP configuration scenario; or the bit width of the DCI indication field being 1 bit, the DCI indication field indicating an DMRS port associated with a PTRS port corresponding to an SRS resource set, a TRP, an antenna panel, or a TCI state in the STxMP configuration scenario.

In combination with some embodiments of the third aspect, in some embodiments, the determination module is further configured to: in a case where the transmission mode is an SDM transmission and the maximum number of transmission layers configured for the SDM transmission is 2, an actual number of PTRS ports sent by a terminal being 2, determine an actual number of transmission layers corresponding to each SRS resource set, each TRP, each antenna panel, or each TCI state; in a case where the actual number of transmission layers corresponding to each SRS resource set, each TRP, each antenna panel, or each TCI state is 2, determine the bit width of the DCI indication field to be 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 1 corresponding to a second SRS resource set, a second TRP, a second antenna panel, or a second TCI state in the STxMP configuration scenario; in a case where the actual number of transmission layers corresponding to each SRS resource set, each TRP, each antenna panel, or each TCI state is 1, determine the bit width and/or the indication manner of the DCI indication field being any one of: the bit width of the DCI indication field being 0 bits; the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 1 corresponding to a second SRS resource set, a second TRP, a second antenna panel, or a second TCI state in the STxMP configuration scenario; or the bit width of the DCI indication field being 1 bit, the DCI indication field indicating a DMRS port associated with a PTRS port corresponding to an SRS resource set, a TRP, an antenna panel, or a TCI state in the STxMP configuration scenario; in a case where the actual number of transmission layers corresponding to a first SRS resource set, a first TRP, a first antenna panel, or a first TCI state is 1, and an actual number of transmission layers corresponding to a second SRS resource set, a second TRP, a second antenna panel, or a second TCI state is 2; or in a case where an actual number of transmission layers corresponding to a first SRS resource set, a first TRP, a first antenna panel, or a first TCI state is 2, and an actual number of transmission layers corresponding to a second SRS resource set, a second TRP, a second antenna panel, or a second TCI state is 1, determine the bit width and/or the indication manner of the DCI indication field being any one of: the bit width of the DCI indication field being 2 bits, an MSB of the DCI indication field indicating a DMRS port associated with a PTRS port 0 corresponding to the first SRS resource set, the first TRP, the first antenna panel, or the first TCI state in the STxMP configuration scenario, an LSB of the DCI indication field indicating a DMRS port associated with a PTRS port 1 corresponding to the second SRS resource set, the second TRP, the second antenna panel, or the second TCI state in the STxMP configuration scenario; or the bit width of the DCI indication field being 1 bit, the DCI indication field indicating a DMRS port associated with a PTRS port corresponding to an SRS resource set with an actual number of transmission layers of 2, a TRP with an actual number of transmission layers of 2, an antenna panel with an actual number of transmission layers of 2, or a TCI state with an actual number of transmission layers of 2.

In combination with some embodiments of the third aspect, in some embodiments, in a case where the transmission mode is an SFN transmission, the number of PTRS ports corresponding to different SRS resource sets, different TRPs, different antenna panels, or different TCI states is the same, and the same PTRS port corresponding to different SRS resource sets, different TRPs, different antenna panels, or different TCI states is associated with the same DMRS port or different DMRS ports.

In combination with some embodiments of the third aspect, in some embodiments, the determination module is further configured to: in a case where the transmission mode is an SFN transmission, the maximum number of transmission layers configured for the SFN transmission is 1, and the maximum number of PTRS ports configured for the SFN transmission is 1, an actual number of PTRS ports sent by a terminal being 1, determine the bit width and/or the indication manner of the DCI indication field being any one of: the bit width of the DCI indication field being 0 bits; the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 0 corresponding to a second SRS resource set, a second TRP, a second antenna panel, or a second TCI state in the STxMP configuration scenario; or the bit width of the DCI indication field being 1 bit, the DCI indication field indicating a DMRS port associated with a PTRS port corresponding to an SRS resource set, a TRP, an antenna panel, or a TCI state in the STxMP configuration scenario.

In combination with some embodiments of the third aspect, in some embodiments, the determination module is further configured to: in a case where the transmission mode is an SFN transmission, the maximum number of transmission layers configured for the SFN transmission is 2, and the maximum number of PTRS ports configured for the SFN transmission is 1, an actual number of PTRS ports sent by a terminal being 1, determine an actual number of transmission layers for each SRS resource set, each TRP, each antenna panel, or each TCI state; in a case where the actual number of transmission layers corresponding to each SRS resource set, each TRP, each antenna panel, or each TCI state is 1, determine the bit width and/or the indication manner of the DCI indication field being any one of: the bit width of the DCI indication field being 0 bits; the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 0 corresponding to a second SRS resource set, a second TRP, a second antenna panel, or a second TCI state in the STxMP configuration scenario; or the bit width of the DCI indication field being 1 bit, the DCI indication field indicating a DMRS port associated with a PTRS port corresponding to an SRS resource set, a TRP, an antenna panel, or a TCI state in the STxMP configuration scenario; in a case where the actual number of transmission layers corresponding to each SRS resource set, each TRP, each antenna panel, or each TCI state is 2, and the same PTRS port corresponding to different SRS resource sets, different TRPs, different antenna panels, or different TCI states is associated with the same DMRS port, determine the bit width and/or the indication manner of the DCI indication field being any one of: the bit width of the DCI indication field being 1 bit, the DCI indication field indicating a DMRS port associated with a PTRS port corresponding to an SRS resource set, a TRP, an antenna panel, or a TCI state in the STxMP configuration scenario; or the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 0 corresponding to a second SRS resource set, a second TRP, a second antenna panel, or a second TCI state in the STxMP configuration scenario.

In combination with some embodiments of the third aspect, in some embodiments, the determination module is further configured to: in a case where the transmission mode is the SFN transmission, the maximum number of transmission layers configured for the SFN transmission is 2, and the maximum number of PTRS ports configured for the SFN transmission is 1, the actual number of PTRS ports sent by the terminal being 1, determine an actual number of transmission layers corresponding to each SRS resource set, each TRP, each antenna panel, or each TCI state; and in a case where the actual number of transmission layers corresponding to each SRS resource set, each TRP, each antenna panel, or each TCI state is 2, and the same PTRS port corresponding to different SRS resource sets, different TRPs, different antenna panels, or different TCI states is associated with different DMRS ports, determine the bit width and/or the indication manner of the DCI indication field being any one of: the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating another DMRS port associated with the PTRS port 0 corresponding to a second SRS resource set, a second TRP, a second antenna panel, or a second TCI state in the STxMP configuration scenario; or the bit width of the DCI indication field being 1 bit, the DCI indication field indicating a DMRS port associated with a PTRS port corresponding to an SRS resource set, a TRP, an antenna panel, or a TCI state in the STxMP configuration scenario.

In combination with some embodiments of the third aspect, in some embodiments, the determination module is further configured to: in a case where the transmission mode is an SFN transmission, the maximum number of transmission layers configured for the SFN transmission is 2, and the maximum number of PTRS ports configured for the SFN transmission is 2, determine an actual number of PTRS ports sent by a terminal; in a case where the actual number of PTRS ports sent by the terminal is 1, determine an actual number of transmission layers for each SRS resource set, each TRP, each antenna panel, or each TCI state; in a case where the actual number of transmission layers corresponding to each SRS resource set, each TRP, each antenna panel, or each TCI state is 1, determine the bit width and/or the indication manner of the DCI indication field being any one of: the bit width of the DCI indication field being 0 bits; the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 0 corresponding to a second SRS resource set, a second TRP, a second antenna panel, or a second TCI state in the STxMP configuration scenario; or the bit width of the DCI indication field being 1 bit, the DCI indication field indicating a DMRS port associated with a PTRS port 0 corresponding to an SRS resource set, a TRP, an antenna panel, or a TCI state in the STxMP configuration scenario; in a case where an actual number of transmission layers corresponding to each SRS resource set, each TRP, each antenna panel, or each TCI state is 2, and the same PTRS port corresponding to different SRS resource sets, different TRPs, different antenna panels, or different TCI states is associated with the same DMRS port, determine the bit width and/or the indication manner of the DCI indication field being any one of: the bit width of the DCI indication field being 1 bit, the DCI indication field indicating a DMRS port associated with a PTRS port corresponding to an SRS resource set, a TRP, an antenna panel, or a TCI state in the STxMP configuration scenario; or the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 0 corresponding to a second SRS resource set, a second TRP, a second antenna panel, or a second TCI state in the STxMP configuration scenario; in a case where the actual number of transmission layers corresponding to each SRS resource set, each TRP, each antenna panel, or each TCI state is 2, and the same PTRS port corresponding to different SRS resource sets, different TRPs, different antenna panels, or different TCI states is associated with different DMRS ports, determine the bit width and/or the indication manner of the DCI indication field being any one of: the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating another DMRS port associated with the PTRS port 0 corresponding to a second SRS resource set, a second TRP, a second antenna panel, or a second TCI state in the STxMP configuration scenario; or the bit width of the DCI indication field being 1 bit, the DCI indication field indicating a DMRS port associated with a PTRS port corresponding to an SRS resource set, a TRP, an antenna panel, or a TCI state in the STxMP configuration scenario.

In combination with some embodiments of the third aspect, in some embodiments, the determination module is further configured to: in a case where the transmission mode is an SFN transmission, the maximum number of transmission layers configured for the SFN transmission is 2, and the maximum number of PTRS ports configured for the SFN transmission is 2, determine an actual number of PTRS ports sent by a terminal; in a case where the actual number of PTRS ports sent by the terminal is 2, and the same PTRS port corresponding to different SRS resource sets, different TRPs, different antenna panels, or different TCI states is associated with the same DMRS port, determine the bit width and/or the indication manner of the DCI indication field being any one of: the bit width of the DCI indication field being 1 bit, the DCI indication field indicating a DMRS port associated with a PTRS port corresponding to an SRS resource set, a TRP, an antenna panel, or a TCI state in the STxMP configuration scenario; the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 1 corresponding to the first SRS resource set, the first TRP, the first antenna panel, or the first TCI state in the STxMP configuration scenario; the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 0 corresponding to a second SRS resource set, a second TRP, a second antenna panel, or a second TCI state in the STxMP configuration scenario; or the bit width of the DCI indication field being 4 bits, first two bits of the DCI indication field indicating DMRS ports associated with two PTRS ports corresponding to a first SRS resource set, a first TRP, a first antenna panel, or a first TCI state in the STxMP configuration scenario; last two bits of the DCI indication field indicating DMRS ports associated with two PTRS ports corresponding to a second SRS resource set, a second TRP, a second antenna panel, or a second TCI state in the STxMP configuration scenario.

In combination with some embodiments of the third aspect, in some embodiments, the determination module is further configured to: in a case where the transmission mode is an SFN transmission, the maximum number of transmission layers configured for the SFN transmission is 2, and the maximum number of PTRS ports configured for the SFN transmission is 2, determine an actual number of PTRS ports sent by a terminal; in a case where the actual number of PTRS ports sent by the terminal is 2, and the same PTRS port corresponding to different SRS resource sets, different TRPs, different antenna panels, or different TCI states is associated with different DMRS ports, determine the bit width and/or the indication manner of the DCI indication field being any one of: the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 0 corresponding to a second SRS resource set, a second TRP, a second antenna panel, or a second TCI state in the STxMP configuration scenario; or the bit width of the DCI indication field being 4 bits, first two bits of the DCI indication field indicating DMRS ports associated with two PTRS ports corresponding to a first SRS resource set, a first TRP, a first antenna panel, or a first TCI state in the STxMP configuration scenario; last two bits of the DCI indication field indicating DMRS ports associated with two PTRS ports corresponding to a second SRS resource set, a second TRP, a second antenna panel, or a second TCI state in the STxMP configuration scenario.

In combination with some embodiments of the third aspect, in some embodiments, the determination module is further configured to: determine a target SRS resource set, a target TRP, a target antenna panel, or a target TCI state from two SRS resource sets, two TRPs, two antenna panels, or two TCI states based on at least one of a predefined rule, a network configuration, or a network indication; and determine the actual number of PTRS ports for the target SRS resource set, the target TRP, the target antenna panel, or the target TCI state as the actual number of PTRS ports sent by the terminal.

In combination with some embodiments of the third aspect, in some embodiments, the apparatus is further configured to: in a case where the SFN transmission is performed based on a codebook, determining the actual number of PTRS ports for the target SRS resource set, the target TRP, the target antenna panel, or the target TCI state based on a TPMI configured by a network device for the target SRS resource set, the target TRP, the target antenna panel, or the target TCI state; and in a case where the SFN transmission is performed based on a non-codebook, determining the actual number of PTRS ports for the target SRS resource set, the target TRP, the target antenna panel, or the target TCI state based on a PTRS index indicated by an SRI field corresponding to the target SRS resource set, the target TRP, the target antenna panel, or the target TCI state in a DCI signaling.

In a fourth aspect, embodiments of the present disclosure provide a communication device, which includes one or more processors and one or more memories for storing instructions. The processors are configured to invoke the instructions to cause the communication device to perform the determination method described in the first aspect and an optional implementation of the first aspect.

In a fifth aspect, embodiments of the present disclosure provide a communication system, which includes a terminal configured to implement the determination method described in the first aspect and an optional implementation of the first aspect, and a network device configured to implement the determination method described in the first aspect and an optional implementation of the first aspect.

In a sixth aspect, embodiments of the present disclosure provide a storage medium, which has stored therein instructions that, when executed on a communication device, cause the communication device to perform the determination method described in the first aspect and an optional implementation of the first aspect.

In a seventh aspect, embodiments of the present disclosure provide a program product that, when executed on a communication device, causes the communication device to perform the determination method described in the first aspect and an optional implementation of the first aspect.

In an eighth aspect, embodiments of the present disclosure provide a computer program that, when run on a computer, causes the computer to perform the determination method described in the first aspect and an optional implementation of the first aspect.

It may be understood that the first communication apparatus, the second communication apparatus, the communication device, the communication system, the storage medium, the program product, and the computer program which are mentioned above are all configured to execute the methods provided in the embodiments of the present disclosure. Therefore, regarding the beneficial effects they may achieve, reference may be made to the beneficial effects of the corresponding methods, which will not be repeated here.

The embodiments of the present disclosure provide a determination method, an apparatus, a communication device, a communication system, and a storage medium. In some embodiments, terms such as a determination method, an information sending method, and an information receiving method may be used interchangeably; terms such as a communication apparatus, an information processing apparatus, an information sending apparatus and an information receiving apparatus may be used interchangeably; and terms such as an information processing system, a communication system, an information sending system and an information receiving system may be used interchangeably.

The embodiments of the present disclosure are not exhaustive, but are merely illustrative of some embodiments, and are not intended to limit the scope of protection of the present disclosure. Unless there is any contradiction, each step in a particular embodiment may be implemented as an independent embodiment, and the steps may be arbitrarily combined. For example, the solution after removing some steps in a particular embodiment may also be implemented as an independent embodiment, and the order of the steps in a particular embodiment may be arbitrarily interchanged. In addition, the optional implementations in a particular embodiment may be arbitrarily combined. Furthermore, the embodiments may be arbitrarily combined. For example, some or all steps in different embodiments may be arbitrarily combined, and a particular embodiment may be arbitrarily combined with optional implementations of other embodiments.

In each embodiment of the present disclosure, unless otherwise specified or contradicted by logic, the terms and/or descriptions between the embodiments are consistent and may be referenced by each other. The technical features in different embodiments may be combined based on their inherent logical relationships to form a new embodiment.

The terms used in the embodiments of the present disclosure are only for the purpose of describing specific embodiments and are not intended to limit the present disclosure.

In the embodiments of the present disclosure, unless otherwise specified, elements expressed in the singular form, such as "a," "an," "the," "above," "said," "above-mentioned," "this," or the like, may mean "one and only one," "one or more," "at least one," or the like. For example, when an article such as "a," "an," and "the" in English in translation is used, the noun following the article may be understood as a singular expression or a plural expression.

In the embodiments of the present disclosure, "a plurality of" refers to two or more.

In some embodiments, terms such as "at least one of," "one or more," "a plurality of," "multiple," and the like may be used interchangeably.

The descriptions in the embodiments of the present disclosure such as "at least one of A, B, C..." or "A and/or B and/or C..." include the case where any one of A, B, C... exists alone, as well as the case where any combination of any multiple of A, B, C... exists. Each case may exist alone. For example, "at least one of A, B, or C" includes the cases of A alone, B alone, C alone, a combination of A and B, a combination of A and C, a combination of B and C, and a combination of A and B and C. For example, A and/or B includes the cases of A alone, B alone, and a combination of A and B.

In some embodiments, the descriptions such as "in one case A, in another case B" or "in response to one case A, in response to another case B" may include the following technical solutions depending on the situations: A is executed independently from B, i.e., A is executed in some embodiments; B is executed independently from A, i.e., B is executed in some embodiments; A and B are selectively executed, i.e., A and B are selectively executed in some embodiments; and A and B are both executed, i.e., A and B are executed in some embodiments. The same applies when there are more branches such as A, B, and C.

The prefixes such as "first" and "second" in the embodiments of the present disclosure are only used to distinguish different described objects and do not constitute any restrictions on the position, order, priority, quantity or content of the described objects. For the statement of the described objects, reference is made to the description in the context of the claims or embodiments, and no unnecessary restrictions should be constituted due to the use of prefixes. For example, if the described object is a "field", the ordinal numbers preceding the "fields" in a "first field" and a "second field" do not limit the position or order of the "fields". "First" and "second" do not limit whether the "fields" they modify are in the same message, nor do they limit the order of the "first field" and "second field". For another example, if the described object is "level", then the ordinal numbers preceding the "levels" in a "first level" and a "second level" do not restrict the priority between "levels". For another example, the number of the described objects is not limited by ordinal numbers and may be one or more. Taking a "first device" as an example, the number of "devices" may be one or more. In addition, the objects modified by different prefixes may be the same or different. For example, if the described object is a "device", then the "first device" and the "second device" may be the same device or different devices, and the types of the "first device" and the "second device" may be the same or different; for another example, if the described object is "information", then "first information" and "second information" may be the same information or different information, and the contents of the "first information" and the "second information" may be the same or different.

In some embodiments, "including A," "comprising A," "indicating A," and "carrying A" may be interpreted as directly carrying A or indirectly indicating A.

In some embodiments, terms such as "in response to...," "in response to determining...," "in the case of...," "at the time of...," "when...," "if...," "in a case where...," and the like may be used interchangeably.

In some embodiments, terms such as "greater than," "greater than or equal to," "not less than," "more than," "more than or equal to," "not smaller than," "higher than," "higher than or equal to," "not lower than," and "above" may be used interchangeably; and terms such as "less than," "less than or equal to," "not greater than," "smaller than," "smaller than or equal to," "not more than," "lower than," "lower than or equal to," "not higher than," and "below" may be used interchangeably.

In some embodiments, devices and the like may be interpreted as physical or virtual, and their names are not limited to the names described in the embodiments. Terms such as "apparatus," "equipment," "device," "circuit," "network element," "node," "function," "unit," "section," "system," "network," "chip," "chip system," "entity," and "body" may be used interchangeably.

In some embodiments, the "network" may be interpreted as devices included in the network, e.g., an access network device, a core network device, or the like.

In some embodiments, terms such as "access network device (AN device)," "radio access network device (RAN device)," "base station (BS)," "radio base station," "fixed station," "node," "access point," "transmission point (TP)," "reception point (RP)," "transmission/reception point (TRP)," "panel," "antenna panel," "antenna array," "cell," "macro cell," "small cell," "femto cell," "pico cell," "sector," "cell group," "carrier," "component carrier," and "bandwidth part (BWP)" may be used interchangeably.

In some embodiments, terms such as terminal, terminal device, user equipment (UE), user terminal, mobile station (MS), mobile terminal (MT), subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, and client may be used interchangeably.

In some embodiments, an access network device, a core network device, or a network device may be replaced by a terminal. For example, the various embodiments of the present disclosure may also be applied to a structure in which the communication between a terminal and an access network device, a core network device, or a network device is replaced by the communication between multiple terminals (for example, also referred to as device-to-device (D2D) communication, vehicle-to-everything (V2X) communication, or the like). In this case, the terminal may be configured to have all or some of the functions of the access network device. Furthermore, the words such as "uplink" and "downlink" may be replaced with words corresponding to an inter-terminal communication (e.g., "side"). For example, an uplink channel, a downlink channel, and the like may be replaced by a side channel, and an uplink, a downlink, and the like may be replaced by a side link.

In some embodiments, the terminal may be replaced by an access network device, a core network device, or a network device. In this case, the access network device, the core network device, or the network device may also be configured to have all or some of the functions of the terminal.

In some embodiments, obtaining data, information, and the like may comply with the laws and regulations of the country where the data, information, and the like are obtained.

In some embodiments, data, information, and the like may be obtained with the consent of the user.

In addition, each element, each row, or each column in the table in the embodiments of the present disclosure may be implemented as an independent embodiment, and the combination of any elements, any rows, and any columns may also be implemented as an independent embodiment.

The corresponding relationships shown in the tables in the present disclosure may be configured or predefined. The values of information in each table are only given by way of example and may be configured as other values, which are not limited in the present disclosure. When configuring the corresponding relationship between the information and each parameter, it is not necessarily required to configure all the corresponding relationships illustrated in each table. For example, in the table in the present disclosure, the corresponding relationships shown in some rows may not be configured. For another example, appropriate adjustments may be made based on the above table, such as splitting, merging, or the like. The names of the parameters shown in the titles of the above tables may also use other names that may be understood by the communication device, and the values or representations of the parameters may also be other values or representations that may be understood by the communication device. When implementing the above tables, other data structures may also be used, such as arrays, queues, containers, stacks, linear lists, pointers, linked lists, trees, graphs, structures, classes, heaps, hash tables or hashed lists.

The term "predefined" in the present disclosure may be understood as defined, predefined, stored, pre-stored, pre-negotiated, pre-configured, solidified, or pre-burned.

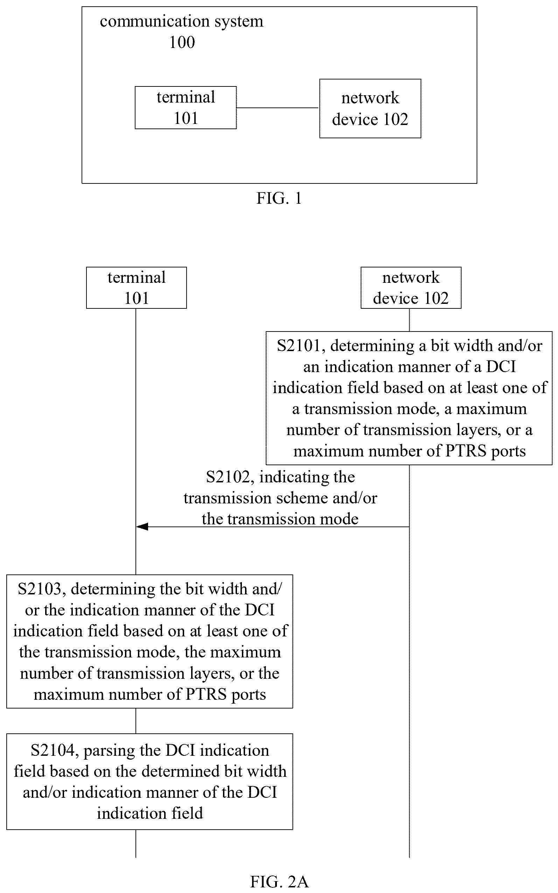

FIG. 1 is a schematic diagram illustrating the architecture of a communication system according to an embodiment of the present disclosure.

As shown in FIG. 1, the communication system may include a terminal 101 and a network device 102. Optionally, the network device 102 may include at least one of an access network device or a core network device.

In some embodiments, for example, the terminal 101 includes, but is not limited to, at least one of mobile phones, wearable devices, Internet of Things devices, cars with communication functions, smart cars, tablets (Pads), computers with wireless transceiver functions virtual reality (VR) devices, augmented reality (AR) devices, wireless terminals in industrial control, wireless terminals in self-driving, wireless terminals in remote medical surgery, wireless terminals in smart grids, wireless terminals in transportation safety, wireless terminals in smart cities, or wireless terminals in smart homes.

In some embodiments, the access network device is, for example, a node or device that connects the terminal to a wireless network. The access network device may include, but is not limited to, at least one of an evolved Node B (eNB), a next generation eNB (ng-eNB), a next generation Node B (gNB), a node B (NB), a home node B (HNB), a home evolved node B (HeNB), a radio backhaul device, a radio network controller (RNC), a base station controller (BSC), a base transceiver station (BTS), a base band unit (BBU), or a mobile switching center in a 5G communication system; a base station, an Open radio access network (RAN), or a Cloud RAN in a 6G communication system; base stations in other communication systems, or an access node in a wireless fidelity (Wi-Fi) system.

In some embodiments, the technical solutions in the present disclosure may be applied to the Open RAN architecture. In this case, the interfaces between or within access network devices involved in the embodiments of the present disclosure may be transformed into internal interfaces of the Open RAN. The procedures and information interactions between these internal interfaces may be implemented by software or programs.

In some embodiments, the access network device may be composed of a centralized unit (CU) and a distributed unit (DU), in which the CU may also be referred to as a control unit. The CU-DU structure may be used to split the protocol layers of the access network device, and the functions of some protocol layers are placed in the CU for centralized control, and the functions of some or all of the remaining protocol layers are distributed in the DU, and the DU is centrally controlled by the CU. However, this is not the only possibility.

In some embodiments, the core network device may be a single device, including one or more network elements, or the core network device may be multiple devices or a group of devices, each including all or some of one or more network elements. The network elements may be virtual or physical. The core network includes, for example, at least one of an evolved packet core (EPC), a 5G core network (5GCN), or a next generation core (NGC).

It may be understood that the communication system described in this embodiment of the present disclosure is for the purpose of more clearly illustrating the technical solution in the embodiments of the present disclosure, but does not constitute a limitation on the technical solution provided in the embodiments of the present disclosure. Those of ordinary skill in the art may know that with the evolution of the system architecture and the emergence of new service scenarios, the technical solution provided in this embodiment of the present disclosure is also applicable to similar technical problems.

The following embodiments of the present disclosure may be applied to the communication system 100 shown in FIG. 1, or to some entities thereof, but are not limited thereto. The entities shown in FIG. 1 are illustrative. The communication system may include all or some of the entities in FIG. 1, or the communication system may include other entities outside of FIG. 1. The number and form of individual entities are arbitrary. The connection relationship between the entities is illustrative. The entities may not be connected to each other, or may be connected to each other in any way. The connection may be direct or indirect, and may be wired or wireless.

The embodiments of the present disclosure may be applied to Long Term Evolution (LTE) systems, LTE-Advanced (LTE-A) systems, LTE-Beyond (LTE-B) systems, SUPER 3G systems, International Mobile Telecommunications-Advanced (IMT-Advanced) systems, 4G mobile communication systems, 5G mobile communication systems, 5G new radio (NR) systems, Future Radio Access (FRA) systems, New-Radio Access Technology (RAT) systems, New Radio (NR) systems, New radio access (NX) systems, Future generation radio access (FX) systems, Global System for Mobile communications (GSM), CDMA2000, Ultra Mobile Broadband (UMB) systems, IEEE 802.11 (Wi-Fi), IEEE 802.16 (WiMAX), IEEE 802.20, Ultra-Wideband (UWB), Bluetooth (a registered trademark), PLMN networks, D2D systems, Machine-to-Machine (M2M) systems, IoT systems, V2X systems, systems utilizing other determination methods, next-generation systems built upon them, and the like. In addition, multiple systems may also be combined (for example, a combination of 5G and LTE or LTE-A, or the like) for application.

FIG. 2A is a schematic diagram illustrating the interaction flow of a determination method according to an embodiment of the present disclosure. As shown in FIG. 2A, embodiments of the present disclosure relate to a determination method performed by the communication system 100, and the method includes the following steps.

At step 2101, a bit width and/or an indication manner of a DCI indication field are/is determined based on at least one of a transmission mode, a maximum number of transmission layers, or a maximum number of PTRS ports in a case where a transmission scheme is performing, by a PUSCH, an MTRP transmission in an uplink STxMP configuration scenario.

Optionally, the STxMP configuration scenario mentioned above may include a terminal and multiple TRPs, and the terminal may include one or more antenna panels. Optionally, the terminal may use one or more antenna panels to send uplink signals to the TRPs. Optionally, PUSCH transmissions in different TRP directions may be associated with different SRS resource sets and different TCI states. The SRS resource sets and the TCI states may be configured by a network device for the terminal. When the terminal sends an uplink signal to a TRP using its antenna panel, the terminal may send the uplink signal based on an SRS resource set and/or a TCI state associated with the TRP direction.

Optionally, in the embodiments, the illustration is performed by taking "the STxMP configuration scenario including two TRPs and the terminal including two antenna panels" as an example, but the embodiments are not limited to this. Optionally, the MTRP transmission in the above-mentioned STxMP configuration scenario may include simultaneously sending, by two antenna panels of the terminal, PUSCHs in two different TRP directions, then the above-mentioned STxMP configuration scenario including two antenna panels, two SRS resource sets, two TRPs, and two TCI states. Optionally, it may be assumed that the two antenna panels are a first antenna panel and a second antenna panel, the two SRS resource sets are a first SRS resource set and a second SRS resource set, the two TRPs are a first TRP and a second TRP, and the two TCI states are a first TCI state and a second TCI state.

Optionally, the transmission mode mentioned above may include an SDM transmission or an SFN transmission. The transmission mode may be configured by the network device for the terminal, for example, the transmission mode may be configured by the network device for the terminal via an RRC signaling. The terminal may perform the MTRP transmission in the transmission mode configured by the network device.

Optionally, the DCI indication field may indicate an association relationship between ports. For example, the association relationship between the ports includes an association relationship between a PTRS port and a DMRS port.

Optionally, in some embodiments, the maximum number of transmission layers mentioned above may be configured by the network device for the terminal, for example, the maximum number of transmission layers may be configured by the network device for the terminal via an RRC signaling. The maximum number of transmission layers may be the maximum number of transmission layers corresponding to each SRS resource set, each TRP, each antenna panel, or each TCI state, that is, the maximum number of transmission layers is the maximum number of transmission layers per SRS resource set/per TRP/per antenna panel/per TCI state. Optionally, the maximum number of transmission layers may vary in different transmission modes. Optionally, when the transmission mode is the SDM transmission, the maximum number of transmission layers and the actual number of transmission layers (where the actual number of transmission layers is less than or equal to the maximum number of transmission layers) corresponding to different SRS resource sets, different TRPs, different antenna panels, or different TCI states may be the same or different; for example, the maximum number of transmission layers corresponding to the first SRS resource set, the first TRP, the first antenna panel, or the first TCI state is 2, and the maximum number of transmission layers corresponding to the second SRS resource set, the second TRP, the second antenna panel, or the second TCI state may be 2 or 1. Optionally, when the transmission mode is the SFN transmission, the maximum number of transmission layers and the actual number of transmission layers (where the actual number of transmission layers is less than or equal to the maximum number of transmission layers) corresponding to different SRS resource sets, different TRPs, different antenna panels, or different TCI states should be the same; for example, the maximum number of transmission layers corresponding to the first SRS resource set, the first TRP, the first antenna panel, or the first TCI state is 2, and the maximum number of transmission layers corresponding to the second SRS resource set, the second TRP, the second antenna panel, or the second TCI state should also be 2.

It should be noted that in some embodiments, "the actual number of transmission layers" mentioned above may also be configured by the network device for the terminal. Optionally, the network device may first configure the maximum number of transmission layers and one or more SRS resource sets for the terminal. The terminal uses the maximum number of transmission layers and SRS resources in the SRS resource sets to send SRSs to the TRPs. The network device may measure the SRSs received by different TRPs, and configure, for the terminal, parameters such as the actual number of transmission layers and SRS resources corresponding to the subsequent PUSCH transmissions of the terminal via a DCI signaling based on the measurement results. Optionally, the DCI signaling may also include the DCI indication field mentioned above and an SRI field. Optionally, the SRI field may be used to configure the PUSCH transmission as an MTRP transmission.

Optionally, in some embodiments, the maximum number of PTRS ports mentioned above may be configured by the network device for the terminal. The maximum number of PTRS ports may be the maximum number of PTRS ports sent by the terminal, that is, the maximum number of PTRS ports may be the maximum number of PTRS ports per terminal. Optionally, the number of PTRS ports corresponding to different SRS resource sets, different TRPs, different antenna panels, or different TCI states of the terminal is the same. For example, when the number of PTRS ports corresponding to the first SRS resource set, the first TRP, the first antenna panel, or the first TCI state is 1, the number of PTRS ports corresponding to the second SRS resource set, the second TRP, the second antenna panel, or the second TCI state should also be 1.

Optionally, in some embodiments, the maximum number of PTRS ports sent by the terminal may vary in different transmission modes. Optionally, when the transmission mode is the SDM transmission, the maximum number of PTRS ports may be 2, and the actual number of PTRS ports sent by the terminal is also 2. Each SRS resource set, each TRP, each antenna panel, or each TCI state corresponds to one PTRS port, and different SRS resource sets, different TRPs, different antenna panels, or different TCI states correspond to different PTRS ports for transmissions. Optionally, when the transmission mode is the SFN transmission, the number of PTRS ports corresponding to different SRS resource sets, different TRPs, different antenna panels, or different TCI states is the same, and the PTRS ports corresponding to different SRS resource sets, different TRPs, different antenna panels, or different TCI states are also the same.

Optionally, for the SFN transmission, since different SRS resource sets, different TRPs, different antenna panels, or different TCI states correspond to the same PTRS port, the number of PTRS ports corresponding to each SRS resource set, each TRP, each antenna panel, or each TCI state is the number of PTRS ports sent by the terminal. For example, it is assumed that the first SRS resource set, the first TRP, the first antenna panel, or the first TCI state corresponds to two PTRS ports, namely PTRS ports 0 and 1; and the second SRS resource set, the second TRP, the second antenna panel, or the second TCI state also corresponds to two PTRS ports, namely PTRS ports 0 and 1. In this case, although the number of PTRS ports corresponding to the first SRS resource set, the first TRP, the first antenna panel, or the first TCI state is 2, and the number of PTRS ports corresponding to the second SRS resource set, the second TRP, the second antenna panel, or the second TCI state is also 2, since different SRS resource sets, different TRPs, different antenna panels, or different TCI states correspond to the same PTRS port, the number of PTRS ports corresponding to the two second SRS resource sets, or the two TRPs, or the two antenna panels, or the two TCI states (or the number of PTRS ports per terminal) is also 2, namely PTRS ports 0 and 1.

Optionally, when the transmission mode is the SFN transmission, the same PTRS port corresponding to different SRS resource sets, different TRPs, different antenna panels, or different TCI states may be associated with the same DMRS port or different DMRS ports. Specifically, when the same PTRS port corresponding to different SRS resource sets, different TRPs, different antenna panels, or different TCI states is associated with the same DMRS port, the PTRS port is considered for an SFN. When the same PTRS port corresponding to different SRS resource sets, different TRPs, different antenna panels, or different TCI states is associated with different DMRS ports, the PTRS port is considered for a non-SFN.

Optionally, before introducing "how to determine the bit width and/or the indication manner of the DCI indication field based on at least one of the transmission mode, the maximum number of transmission layers, or the maximum number of PTRS ports", the relationship between the number of transmission layers, DMRS ports, and PTRS ports will be introduced first.

Optionally, the actual number of transmission layers for each SRS resource set, each TRP, each antenna panel, or each TCI state may be *N,* where *N* is a positive integer. Each transmission layer corresponds to a DMRS port (it should be noted that in the SDM transmission, the DMRS ports corresponding to different SRS resource sets, different TRPs, different antenna panels, or different TCI states are different; and in the SFN transmission, the DMRS ports corresponding to different SRS resource sets, different TRPs, different antenna panels, or different TCI states are the same). Optionally, the actual number of PTRS ports corresponding to each SRS resource set, each TRP, each antenna panel, or each TCI state may be *M*, where *M* is less than or equal to *N.* A DMRS port associated with the number of PTRS ports corresponding to each SRS resource set, each TRP, each antenna panel, or each TCI state may be a DMRS port corresponding to a certain number of transmission layers for each SRS resource set, each TRP, each antenna panel, or each TCI state. For example, if the actual number of transmission layers corresponding to the first SRS resource set, the first TRP, the first antenna panel, or the first TCI state is 2, and these two transmission layers correspond to a DMRS port 0 and a DMRS port 1, respectively, and the first SRS resource set, the first TRP, the first antenna panel, or the first TCI state corresponds to one PTRS port, such as a PTRS port 1, then the PTRS port 1 may be associated with any one of the DMRS port 0 or the DMRS port 1. In this case, the DCI indication field is needed to indicate which of the DMRS port 0 or the DMRS port 1 the PTRS port 1 is associated with.

Based on this, in some embodiments, the above-mentioned method for determining the bit width and/or the indication manner of the DCI indication field based on at least one of the transmission mode, the maximum number of transmission layers, or the maximum number of PTRS ports may include as follows.

When the transmission mode is the SDM transmission and the maximum number of transmission layers configured for the SDM transmission is 1, the actual number of PTRS ports sent by the terminal is 2, for example, the PTRS port 0 corresponding to the first SRS resource set, the first TRP, the first antenna panel, or the first TCI state, and the PTRS port 1 corresponding to the second SRS resource set, the second TRP, the second antenna panel, or the second TCI state. Then, the bit width and/or the indication manner of the DCI indication field are/is determined to be any one of the following.

The bit width of the DCI indication field is 0 bits. Optionally, since each SRS resource set, each TRP, each antenna panel, or each TCI state corresponds to one PTRS port in the SDM transmission, if the maximum number of transmission layers configured for the SDM transmission is 1, then it is indicated that the actual number of transmission layers corresponding to each SRS resource set, each TRP, each antenna panel, or each TCI state should also be 1. Optionally, since different number of transmission layers corresponds to one DMRS port, the number of DMRS ports corresponding to each SRS resource set, each TRP, each antenna panel, or each TCI state is also 1. Furthermore, since each TRP, each antenna panel, or each TCI state corresponds to one PTRS port, the DMRS port associated with the PTRS port corresponding to each TRP, each antenna panel, or each TCI state must be one DMRS port corresponding to each TRP, each antenna panel, or each TCI state. Thus, it is possible to know the association relationship between the DMRS port associated with the PTRS port corresponding to each TRP, each antenna panel, or each TCI state and the PTRS port without indication.

The bit width of the DCI indication field is 2 bits. An MSB of the DCI indication field indicates a DMRS port associated with a PTRS port 0 corresponding to the first SRS resource set, the first TRP, the first antenna panel, or the first TCI state in the STxMP configuration scenario. An LSB of the DCI indication field indicates a DMRS port associated with a PTRS port 1 corresponding to the second SRS resource set, the second TRP, the second antenna panel, or the second TCI state in the STxMP configuration scenario.

The bit width of the DCI indication field 1 bit. The DCI indication field indicates a DMRS port associated with a PTRS port corresponding to an SRS resource set, a TRP, an antenna panel, or a TCI state in the STxMP configuration scenario. Optionally, the 1 bit may be pre-agreed and/or preconfigured to indicate which SRS resource set, which TRP, which antenna panel, or which TCI state corresponds to the DMRS port associated with the PTRS port. For example, the 1 bit may be pre-agreed and/or preconfigured to indicate the DMRS port associated with the first SRS resource set, the first TRP, the first antenna panel, or the first TCI state.

Optionally, in other embodiments, the above-mentioned "determining the bit width and/or the indication manner of the DCI indication field based on at least one of the transmission mode, the maximum number of transmission layers, or the maximum number of PTRS ports" may include as follows.

When the transmission mode is the SDM transmission and the maximum number of transmission layers configured for the SDM transmission is 2, the actual number of PTRS ports sent by the terminal is 2, for example, the PTRS port 0 corresponding to the first SRS resource set, the first TRP, the first antenna panel, or the first TCI state, and the PTRS port 1 corresponding to the second SRS resource set, the second TRP, the second antenna panel, or the second TCI state. Then, the actual number of transmission layers corresponding to each SRS resource set, each TRP, each antenna panel, or each TCI state may be determined first.

Optionally, under the premise that the transmission mode is the SDM transmission and the maximum number of transmission layers configured for the SDM transmission is 2, in a case where the actual number of transmission layers corresponding to each SRS resource set, each TRP, each antenna panel, or each TCI state is 2, the bit width of the DCI indication field is determined to be 2 bits, an MSB of the DCI indication field indicates a DMRS port associated with a PTRS port 0 corresponding to the first SRS resource set, the first TRP, the first antenna panel, or the first TCI state in the STxMP configuration scenario, and an LSB of the DCI indication field indicates a DMRS port associated with a PTRS port 1 corresponding to the second SRS resource set, the second TRP, the second antenna panel, or the second TCI state in the STxMP configuration scenario.

Optionally, under the premise that the transmission mode is the SDM transmission and the maximum number of transmission layers configured for the SDM transmission is 2, in a case where the actual number of transmission layers corresponding to each SRS resource set, each TRP, each antenna panel, or each TCI state is 1, the bit width and/or the indication manner of the DCI indication field are/is determined to be any one of: the bit width of the DCI indication field being 0 bits; the bit width of the DCI indication field being 2 bits, an MSB of the DCI indication field indicating a DMRS port associated with a PTRS port 0 corresponding to the first SRS resource set, the first TRP, the first antenna panel, or the first TCI state in the STxMP configuration scenario, an LSB of the DCI indication field indicating a DMRS port associated with a PTRS port 1 corresponding to the second SRS resource set, the second TRP, the second antenna panel, or the second TCI state in the STxMP configuration scenario; or the bit width of the DCI indication field being 1 bit, the DCI indication field indicating a DMRS port associated with a PTRS port corresponding to an SRS resource set, a TRP, an antenna panel, or a TCI state in the STxMP configuration scenario.

Optionally, under the premise that the transmission mode is the SDM transmission and the maximum number of transmission layers configured for the SDM transmission is 2, in a case where the actual number of transmission layers corresponding to the first SRS resource set, the first TRP, the first antenna panel, or the first TCI state is 1, and the actual number of transmission layers corresponding to the second SRS resource set, the second TRP, the second antenna panel, or the second TCI state is 2; or in a case where the actual number of transmission layers corresponding to the first SRS resource set, the first TRP, the first antenna panel, or the first TCI state is 2, and the actual number of transmission layers corresponding to the second SRS resource set, the second TRP, the second antenna panel, or the second TCI state is 1, the bit width and/or the indication manner of the DCI indication field are/is determined to be any one of: the bit width of the DCI indication field being 2 bits, an MSB of the DCI indication field indicating a DMRS port associated with a PTRS port 0 corresponding to the first SRS resource set, the first TRP, the first antenna panel, or the first TCI state in the STxMP configuration scenario, an LSB of the DCI indication field indicating a DMRS port associated with a PTRS port 1 corresponding to the second SRS resource set, the second TRP, the second antenna panel, or the second TCI state in the STxMP configuration scenario; or the bit width of the DCI indication field being 1 bit, the DCI indication field indicating a DMRS port associated with a PTRS port corresponding to an SRS resource set with the actual number of transmission layers of 2, a TRP with the actual number of transmission layers of 2, an antenna panel with the actual number of transmission layers of 2, or a TCI state with the actual number of transmission layers of 2. Optionally, the reason for only indicating the DMRS port associated with the PTRS port corresponding to the SRS resource set, the TRP, the antenna panel, or the TCI state with the actual number of transmission layers of 2, rather than indicating the DMRS port associated with the PTRS port corresponding to the SRS resource set, the TRP, the antenna panel, or the TCI state with the actual number of transmission layers of 1 is that the DMRS port associated with the PTRS port corresponding to the SRS resource set, the TRP, the antenna panel, or the TCI state with the actual number of transmission layers of 1 does not need to be indicated. Optionally, if the SRS resource set, the TRP, the antenna panel, or the TCI state with the actual number of transmission layers of 1 corresponds to only one DMRS port, then the DMRS port associated with the PTRS port corresponding to the SRS resource set, the TRP, the antenna panel, or the TCI state with the actual number of transmission layers of 1 must be that one DMRS port, and therefore no further indication is needed.

Optionally, in some other embodiments, the above-mentioned "determining the bit width and/or the indication manner of the DCI indication field based on at least one of the transmission mode, the maximum number of transmission layers, or the maximum number of PTRS ports" may include as follows.

When the transmission mode is the SFN transmission, the maximum number of transmission layers configured for the SFN transmission is 1, and the maximum number of PTRS ports configured for the SFN transmission is 1, the actual number of PTRS ports sent by the terminal is 1, for example, the first SRS resource set, the first TRP, the first antenna panel, or the first TCI state corresponds to a PTRS port 0, and the second SRS resource set, the second TRP, the second antenna panel, or the second TCI state also corresponds to the PTRS port 0. Then, the bit width and/or the indication manner of the DCI indication field are/is determined to be any one of: the bit width of the DCI indication field being 0 bits; the bit width of the DCI indication field being 2 bits, an MSB of the DCI indication field indicating a DMRS port associated with a PTRS port 0 corresponding to the first SRS resource set, the first TRP, the first antenna panel, or the first TCI state in the STxMP configuration scenario, an LSB of the DCI indication field indicating a DMRS port associated with a PTRS port 0 corresponding to the second SRS resource set, the second TRP, the second antenna panel, or the second TCI state in the STxMP configuration scenario; or the bit width of the DCI indication field being 1 bit, the DCI indication field indicating a DMRS port associated with a PTRS port corresponding to an SRS resource set, a TRP, an antenna panel, or a TCI state in the STxMP configuration scenario.

Optionally, in some other embodiments, the above-mentioned "determining the bit width and/or the indication manner of the DCI indication field based on at least one of the transmission mode, the maximum number of transmission layers, or the maximum number of PTRS ports" may include as follows.

When the transmission mode is the SFN transmission, the maximum number of transmission layers configured for the SFN transmission is 2, and the maximum number of PTRS ports configured for the SFN transmission is 1, the actual number of PTRS ports sent by the terminal is 1, for example, the first SRS resource set, the first TRP, the first antenna panel, or the first TCI state corresponds to a PTRS port 0, and the second SRS resource set, the second TRP, the second antenna panel, or the second TCI state also corresponds to the PTRS port 0. Then, the actual number of transmission layers is determined for each SRS resource set, each TRP, each antenna panel, or each TCI state.

Optionally, under the premise that the transmission mode is the SFN transmission, the maximum number of transmission layers configured for the SFN transmission is 2, and the maximum number of PTRS ports configured for the SFN transmission is 1, in a case where the actual number of transmission layers corresponding to each SRS resource set, each TRP, each antenna panel, or each TCI state is 1, the bit width and/or the indication manner of the DCI indication field are/is determined to be any one of: the bit width of the DCI indication field being 0 bits; the bit width of the DCI indication field being 2 bits, an MSB of the DCI indication field indicating a DMRS port associated with a PTRS port 0 corresponding to the first SRS resource set, the first TRP, the first antenna panel, or the first TCI state in the STxMP configuration scenario, an LSB of the DCI indication field indicating a DMRS port associated with a PTRS port 0 corresponding to the second SRS resource set, the second TRP, the second antenna panel, or the second TCI state in the STxMP configuration scenario; or the bit width of the DCI indication field being 1 bit, the DCI indication field indicating a DMRS port associated with a PTRS port corresponding to an SRS resource set, a TRP, an antenna panel, or a TCI state in the STxMP configuration scenario.

Optionally, under the premise that the transmission mode is the SFN transmission, the maximum number of transmission layers configured for the SFN transmission is 2, and the maximum number of PTRS ports configured for the SFN transmission is 1, in a case where the actual number of transmission layers corresponding to each SRS resource set, each TRP, each antenna panel, or each TCI state is 2, and the same PTRS port corresponding to different SRS resource sets, different TRPs, different antenna panels, or different TCI states is associated with the same DMRS port, the bit width and/or the indication manner of the DCI indication field are/is determined to be any one of: the bit width of the DCI indication field being 1 bit, the DCI indication field indicating a DMRS port associated with a PTRS port corresponding to an SRS resource set, a TRP, an antenna panel, or a TCI state in the STxMP configuration scenario; or the bit width of the DCI indication field being 2 bits, an MSB of the DCI indication field indicating a DMRS port associated with a PTRS port 0 corresponding to the first SRS resource set, the first TRP, the first antenna panel, or the first TCI state in the STxMP configuration scenario, an LSB of the DCI indication field indicating a DMRS port associated with a PTRS port 0 corresponding to the second SRS resource set, the second TRP, the second antenna panel, or the second TCI state in the STxMP configuration scenario.

Optionally, under the premise that the transmission mode is the SFN transmission, the maximum number of transmission layers configured for the SFN transmission is 2, and the maximum number of PTRS ports configured for the SFN transmission is 1, in a case where the actual number of transmission layers corresponding to each SRS resource set, each TRP, each antenna panel, or each TCI state is 2, and the same PTRS port corresponding to different SRS resource sets, different TRPs, different antenna panels, or different TCI states is associated with different DMRS ports, the bit width and/or the indication manner of the DCI indication field are/is determined to be any one of: the bit width of the DCI indication field being 2 bits, an MSB of the DCI indication field indicating a DMRS port associated with a PTRS port 0 corresponding to the first SRS resource set, the first TRP, the first antenna panel, or the first TCI state in the STxMP configuration scenario, an LSB of the DCI indication field indicating another DMRS port associated with the PTRS port 0 corresponding to the second SRS resource set, the second TRP, the second antenna panel, or the second TCI state in the STxMP configuration scenario; or the bit width of the DCI indication field being 1 bit, the DCI indication field indicating a DMRS port associated with a PTRS port corresponding to an SRS resource set, a TRP, an antenna panel, or a TCI state in the STxMP configuration scenario.

The principle of how the DMRS ports associated with the PTRS ports corresponding to two SRS resource sets, two TRPs, two antenna panels, or two TCI states are clearly indicated is explained below when the bit width of the DCI indication field is 1 bit "in a case where the actual number of transmission layers corresponding to each SRS resource set, each TRP, each antenna panel, or each TCI state is 2, and the same PTRS port corresponding to different SRS resource sets, different TRPs, different antenna panels, or different TCI states is associated with different DMRS ports under the premise that the transmission mode is the SFN transmission, the maximum number of transmission layers configured for the SFN transmission is 2, and the maximum number of PTRS ports configured for the SFN transmission is 1".

Optionally, since the DMRS ports corresponding to different SRS resource sets, different TRPs, different antenna panels, or different TCI states in the SFN transmission are the same, if the actual number of transmission layers corresponding to each SRS resource set, each TRP, each antenna panel, or each TCI state is 2, then each SRS resource set, each TRP, each antenna panel, or each TCI state corresponds to the same two DMRS ports, for example, corresponding to a DMRS port 0 and a DMRS port 1. At this time, if the actual number of PTRS ports sent by the terminal is 1 (for example, the first SRS resource set, the first TRP, the first antenna panel, or the first TCI state corresponds to a PTRS port 0, and the second SRS resource set, the second TRP, the second antenna panel, or the second TCI state also corresponds to the PTRS port 0), and the same PTRS port corresponding to different SRS resource sets, different TRPs, different antenna panels, or different TCI states is associated with different DMRS ports, then it is only needed to indicate a DMRS port associated with a PTRS port 0 corresponding to a certain SRS resource set, a certain TRP, a certain antenna panel, or a certain TCI state, and a DMRS port associated with the PTRS port 0 corresponding to another SRS resource set, another TRP, another antenna panel, or another TCI state is known by default. For example, it is assumed that the DMRS port associated with the PTRS port 0 corresponding to the first SRS resource set, the first TRP, the first antenna panel, or the first TCI state is a DMRS port 0. Since the same PTRS port corresponding to different SRS resource sets, different TRPs, different antenna panels, or different TCI states is associated with different DMRS ports, the DMRS port associated with the PTRS port 0 corresponding to the second SRS resource set, the second TRP, the second antenna panel, or the second TCI state must be a DMRS port 1.

Optionally, in some other embodiments, the above-mentioned "determining the bit width and/or the indication manner of the DCI indication field based on at least one of the transmission mode, the maximum number of transmission layers, or the maximum number of PTRS ports" may include as follows.

When the transmission mode is an SFN transmission, the maximum number of transmission layers configured for the SFN transmission is 2, and the maximum number of PTRS ports configured for the SFN transmission is 2, the actual number of PTRS ports sent by the terminal is determined.

When the actual number of PTRS ports sent by the terminal is 1, for example, the first SRS resource set, the first TRP, the first antenna panel, or the first TCI state corresponds to a PTRS port 0, and the second SRS resource set, the second TRP, the second antenna panel, or the second TCI state also corresponds to the PTRS port 0, the actual number of transmission layers for each SRS resource set, each TRP, each antenna panel, or each TCI state is determined.

Under the premise that "the transmission mode is the SFN transmission, the maximum number of transmission layers configured for the SFN transmission is 2, the maximum number of PTRS ports configured for the SFN transmission is 2, and the actual number of PTRS ports sent by the terminal is 1", in a case where the actual number of transmission layers corresponding to each SRS resource set, each TRP, each antenna panel, or each TCI state is 1, the bit width and/or the indication manner of the DCI indication field are/is determined to be any one of: the bit width of the DCI indication field being 0 bits; the bit width of the DCI indication field being 2 bits, an MSB of the DCI indication field indicating a DMRS port associated with a PTRS port 0 corresponding to the first SRS resource set, the first TRP, the first antenna panel, or the first TCI state in the STxMP configuration scenario, an LSB of the DCI indication field indicating a DMRS port associated with a PTRS port 0 corresponding to the second SRS resource set, the second TRP, the second antenna panel, or the second TCI state in the STxMP configuration scenario; or the bit width of the DCI indication field being 1 bit, the DCI indication field indicating a DMRS port associated with a PTRS port 0 corresponding to an SRS resource set, a TRP, an antenna panel, or a TCI state in the STxMP configuration scenario.

Under the premise that "the transmission mode is the SFN transmission, the maximum number of transmission layers configured for the SFN transmission is 2, the maximum number of PTRS ports configured for the SFN transmission is 2, and the actual number of PTRS ports sent by the terminal is 1", in a case where the actual number of transmission layers corresponding to each SRS resource set, each TRP, each antenna panel, or each TCI state is 2, and the same PTRS port corresponding to different SRS resource sets, different TRPs, different antenna panels, or different TCI states is associated with the same DMRS port, the bit width and/or the indication manner of the DCI indication field are/is determined to be any one of: the bit width of the DCI indication field being 1 bit, the DCI indication field indicating a DMRS port associated with a PTRS port corresponding to an SRS resource set, a TRP, an antenna panel, or a TCI state in the STxMP configuration scenario; or the bit width of the DCI indication field being 2 bits, an MSB of the DCI indication field indicating a DMRS port associated with a PTRS port 0 corresponding to the first SRS resource set, the first TRP, the first antenna panel, or the first TCI state in the STxMP configuration scenario, an LSB of the DCI indication field indicating a DMRS port associated with a PTRS port 0 corresponding to the second SRS resource set, the second TRP, the second antenna panel, or the second TCI state in the STxMP configuration scenario.

Under the premise that "the transmission mode is the SFN transmission, the maximum number of transmission layers configured for the SFN transmission is 2, the maximum number of PTRS ports configured for the SFN transmission is 2, and the actual number of PTRS ports sent by the terminal is 1", in a case where the actual number of transmission layers corresponding to each SRS resource set, each TRP, each antenna panel, or each TCI state is 2, and the same PTRS port corresponding to different SRS resource sets, different TRPs, different antenna panels, or different TCI states is associated with different DMRS ports, the bit width and/or the indication manner of the DCI indication field are/is determined to be any one of: the bit width of the DCI indication field being 2 bits, an MSB of the DCI indication field indicating a DMRS port associated with a PTRS port 0 corresponding to the first SRS resource set, the first TRP, the first antenna panel, or the first TCI state in the STxMP configuration scenario, an LSB of the DCI indication field indicating another DMRS port associated with the PTRS port 0 corresponding to the second SRS resource set, the second TRP, the second antenna panel, or the second TCI state in the STxMP configuration scenario; or the bit width of the DCI indication field being 1 bit, the DCI indication field indicating a DMRS port associated with a PTRS port corresponding to an SRS resource set, a TRP, an antenna panel, or a TCI state in the STxMP configuration scenario.

Optionally, in some other embodiments, the above-mentioned "determining the bit width and/or the indication manner of the DCI indication field based on at least one of the transmission mode, the maximum number of transmission layers, or the maximum number of PTRS ports" may include as follows.

When the transmission mode is an SFN transmission, the maximum number of transmission layers configured for the SFN transmission is 2, and the maximum number of PTRS ports configured for the SFN transmission is 2, the actual number of PTRS ports sent by the terminal is determined.

When the actual number of PTRS ports sent by the terminal is 2, for example, the first SRS resource set, the first TRP, the first antenna panel, or the first TCI state corresponds to a PTRS port 0 and a PTRS port 1, and the second SRS resource set, the second TRP, the second antenna panel, or the second TCI state also corresponds to the PTRS port 0 and the PTRS port 1, it is indicated that the actual number of transmission layers configured for the SFN transmission must be 2. At this time, if the same PTRS port corresponding to different SRS resource sets, different TRPs, different antenna panels, or different TCI states is associated with the same DMRS port, the bit width and/or the indication manner of the DCI indication field are/is determined to be any one of the following.

The bit width of the DCI indication field is 1 bit, the DCI indication field indicates a DMRS port associated with a PTRS port corresponding to an SRS resource set, a TRP, an antenna panel, or a TCI state in the STxMP configuration scenario.

The bit width of the DCI indication field is 2 bits, an MSB of the DCI indication field indicates a DMRS port associated with a PTRS port 0 corresponding to the first SRS resource set, the first TRP, the first antenna panel, or the first TCI state in the STxMP configuration scenario, and an LSB of the DCI indication field indicates a DMRS port associated with a PTRS port 1 corresponding to the first SRS resource set, the first TRP, the first antenna panel, or the first TCI state in the STxMP configuration scenario; or an MSB of the DCI indication field indicates a DMRS port associated with a PTRS port 1 corresponding to the first SRS resource set, the first TRP, the first antenna panel, or the first TCI state in the STxMP configuration scenario, and an LSB of the DCI indication field indicates a DMRS port associated with a PTRS port 0 corresponding to the first SRS resource set, the first TRP, the first antenna panel, or the first TCI state in the STxMP configuration scenario.

The bit width of the DCI indication field is 2 bits, an MSB of the DCI indication field indicates a DMRS port associated with a PTRS port 0 corresponding to the first SRS resource set, the first TRP, the first antenna panel, or the first TCI state in the STxMP configuration scenario, and an LSB of the DCI indication field indicates a DMRS port associated with a PTRS port 0 corresponding to the second SRS resource set, the second TRP, the second antenna panel, or the second TCI state in the STxMP configuration scenario; or an MSB of the DCI indication field indicates a DMRS port associated with a PTRS port 1 corresponding to the first SRS resource set, the first TRP, the first antenna panel, or the first TCI state in the STxMP configuration scenario, and an LSB of the DCI indication field indicates a DMRS port associated with a PTRS port 1 corresponding to the second SRS resource set, the second TRP, the second antenna panel, or the second TCI state in the STxMP configuration scenario.

The bit width of the DCI indication field is 4 bits, first two bits of the DCI indication field indicate DMRS ports associated with two PTRS ports corresponding to the first SRS resource set, the first TRP, the first antenna panel, or the first TCI state in the STxMP configuration scenario; and last two bits of the DCI indication field indicate DMRS ports associated with two PTRS ports corresponding to the second SRS resource set, the second TRP, the second antenna panel, or the second TCI state in the STxMP configuration scenario.

Optionally, in some other embodiments, the above-mentioned "determining the bit width and/or the indication manner of the DCI indication field based on at least one of the transmission mode, the maximum number of transmission layers, or the maximum number of PTRS ports" may include as follows.

When the transmission mode is an SFN transmission, the maximum number of transmission layers configured for the SFN transmission is 2, and the maximum number of PTRS ports configured for the SFN transmission is 2, the actual number of PTRS ports sent by the terminal is determined.

When the actual number of PTRS ports sent by the terminal is 2, for example, the first SRS resource set, the first TRP, the first antenna panel, or the first TCI state corresponds to a PTRS port 0 and a PTRS port 1, and the second SRS resource set, the second TRP, the second antenna panel, or the second TCI state also corresponds to the PTRS port 0 and the PTRS port 1, it is indicated that the actual number of transmission layers configured for the SFN transmission must be 2. At this time, if the same PTRS port corresponding to different SRS resource sets, different TRPs, different antenna panels, or different TCI states is associated with different DMRS ports, the bit width and/or the indication manner of the DCI indication field are/is determined to be any one of the following.

The bit width of the DCI indication field is 2 bits, an MSB of the DCI indication field indicates a DMRS port associated with a PTRS port 0 corresponding to the first SRS resource set, the first TRP, the first antenna panel, or the first TCI state in the STxMP configuration scenario, and an LSB of the DCI indication field indicates a DMRS port associated with the PTRS port 0 corresponding to the second SRS resource set, the second TRP, the second antenna panel, or the second TCI state in the STxMP configuration scenario; or an MSB of the DCI indication field indicates a DMRS port associated with a PTRS port 1 corresponding to the first SRS resource set, the first TRP, the first antenna panel, or the first TCI state in the STxMP configuration scenario, and an LSB of the DCI indication field indicates a DMRS port associated with the PTRS port 1 corresponding to the second SRS resource set, the second TRP, the second antenna panel, or the second TCI state in the STxMP configuration scenario; or an MSB of the DCI indication field indicates a DMRS port associated with a PTRS port 1 corresponding to the first SRS resource set, the first TRP, the first antenna panel, or the first TCI state in the STxMP configuration scenario, and an LSB of the DCI indication field indicates a DMRS port associated with a PTRS port 0 corresponding to the second SRS resource set, the second TRP, the second antenna panel, or the second TCI state in the STxMP configuration scenario; or an MSB of the DCI indication field indicates a DMRS port associated with a PTRS port 0 corresponding to the first SRS resource set, the first TRP, the first antenna panel, or the first TCI state in the STxMP configuration scenario, and an LSB of the DCI indication field indicates a DMRS port associated with a PTRS port 1 corresponding to the second SRS resource set, the second TRP, the second antenna panel, or the second TCI state in the STxMP configuration scenario.

The bit width of the DCI indication field is 4 bits, first two bits of the DCI indication field indicate DMRS ports associated with two PTRS ports corresponding to the first SRS resource set, the first TRP, the first antenna panel, or the first TCI state in the STxMP configuration scenario; and last two bits of the DCI indication field indicate DMRS ports associated with two PTRS ports corresponding to the second SRS resource set, the second TRP, the second antenna panel, or the second TCI state in the STxMP configuration scenario.

The bit width of the DCI indication field is 1 bit, and the DCI indication field indicates a DMRS port associated with a PTRS port corresponding to an SRS resource set, a TRP, an antenna panel, or a TCI state in the STxMP configuration scenario. Optionally, since the DMRS ports associated with the PTRS ports corresponding to another SRS resource set, another TRP, another antenna panel, or another TCI state are different, it may be determined by default which DMRS ports are associated with the PTRS ports corresponding to the other SRS resource set, the other TRP, the other antenna panel, or the other TCI state. Regarding the relevant principle, reference may be made to the above-mentioned principle of how the DMRS ports associated with the PTRS ports corresponding to two SRS resource sets, two TRPs, two antenna panels, or two TCI states are clearly indicated when the bit width of the DCI indication field is 1 bit "in a case where the actual number of transmission layers corresponding to each SRS resource set, each TRP, each antenna panel, or each TCI state is 2, and the same PTRS port corresponding to different SRS resource sets, different TRPs, different antenna panels, or different TCI states is associated with different DMRS ports under the premise that the transmission mode is the SFN transmission, the maximum number of transmission layers configured for the SFN transmission is 2, and the maximum number of PTRS ports configured for the SFN transmission is 1", which will not be elaborated here.

Optionally, in some embodiments, the above-mentioned "determining the actual number of PTRS ports sent by the terminal" includes the following steps.

At step *a*, a target SRS resource set, a target TRP, a target antenna panel, or a target TCI state is determined from two SRS resource sets, two TRPs, two antenna panels, or two TCI states based on at least one of a predefined rule, a network configuration, or a network indication.

Optionally, the target SRS resource set, the target TRP, the target antenna panel, or the target TCI state may be any one of the two SRS resource sets, the two TRPs, the two antenna panels, or the two TCI states.

At step b, the actual number of PTRS ports for the target SRS resource set, the target TRP, the target antenna panel, or the target TCI state is determined as the actual number of PTRS ports sent by the terminal.

Optionally, as may be seen from the above contents, the actual number of PTRS ports sent by the terminal is mainly determined when the transmission mode is the SFN transmission. Based on this, in some embodiments, when the SFN transmission is a codebook-based transmission, the actual number of PTRS ports for the target SRS resource set, the target TRP, the target antenna panel, or the target TCI state may be determined based on a transmitted precoding matrix indicator (TPMI) corresponding to the target SRS resource set, the target TRP, the target antenna panel, or the target TCI state. Optionally, the TPMI may be indicated by a DCI signaling, and optionally, the DCI signaling may also carry the above-mentioned SRI field and the above-mentioned DCI indication field.

When the SFN transmission is a non-codebook-based transmission, the actual number of PTRS ports for the target SRS resource set, the target TRP, the target antenna panel, or the target TCI state may be determined based on a PTRS index indicated by an SRI field in a DCI signaling corresponding to the target SRS resource set, the target TRP, the target antenna panel, or the target TCI state.

At step 2102, the network device indicates the transmission scheme and/or the transmission mode to the terminal.

Optionally, in some embodiments, the network device may indicate, to the terminal, whether the transmission scheme is an MTRP transmission via the SRI indication field in the DCI signaling. Optionally, the DCI signaling may include the above-mentioned DCI indication field. Optionally, the network device may indicate, to the terminal, whether the MTRP transmission is an SDM or SFN transmission via an RRC signaling.

At step 2103, the terminal determines the bit width and/or the indication manner of the DCI indication field based on at least one of the transmission mode, the maximum number of transmission layers, or the maximum number of PTRS ports in a case where the transmission scheme is performing, by the PUSCH, the MTRP transmission in the uplink STxMP configuration scenario.

Optionally, in some embodiments, the procedure used by the terminal to determine the bit width and/or the indication manner of the DCI indication field is the same as the procedure used by the network device to determine the bit width and/or the indication manner of the DCI indication field. Regarding the specific process, reference may be made to the description in the above embodiments.

At step 2104, the terminal parses the DCI indication field based on the determined bit width and/or indication manner of the DCI indication field.

The determination method involved in the embodiments of the present disclosure may include at least one of steps S2101 to S2104. For example, step S2101 may be implemented as an independent embodiment, step S2102 may be implemented as an independent embodiment, step S2103 may be implemented as an independent embodiment, and steps S2101+S2102 may be implemented as an independent embodiment, but the determination method involved in the embodiments of the present disclosure is not limited thereto.

In this implementation or embodiment, unless there is any contradiction, individual steps may be independent, arbitrarily combined or exchanged in order, and the optional implementations or embodiments may be arbitrarily combined and may be arbitrarily combined with other implementations or embodiments.

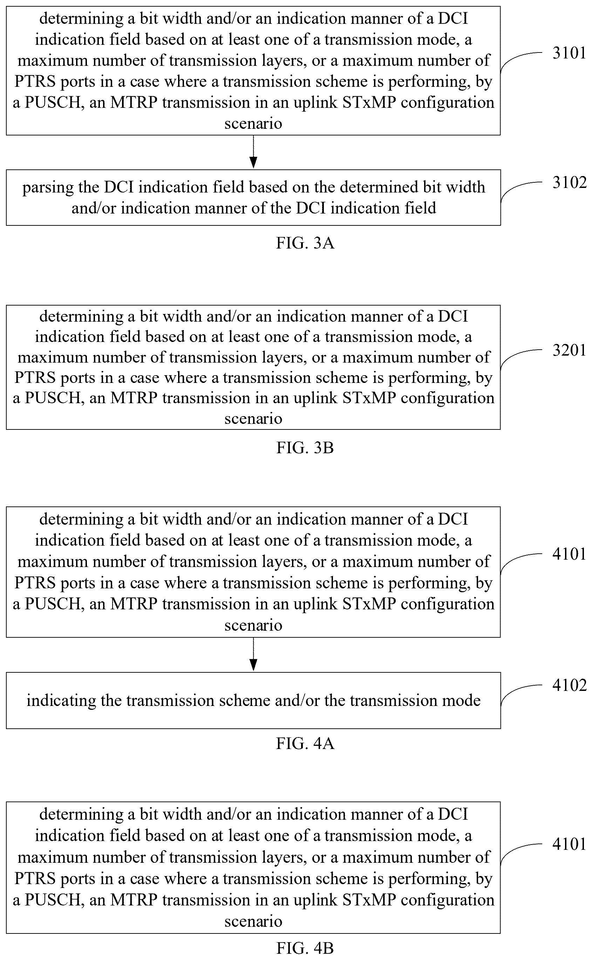

FIG. 3A is a schematic diagram illustrating the interaction flow of a determination method according to an embodiment of the present disclosure. As shown in FIG. 3A, embodiments of the present disclosure relate to a determination method performed by the terminal 101, and the method includes the following steps.

At step 3101, a bit width and/or an indication manner of a DCI indication field are/is determined based on at least one of a transmission mode, a maximum number of transmission layers, or a maximum number of PTRS ports in a case where a transmission scheme is performing, by a PUSCH, an MTRP transmission in an uplink STxMP configuration scenario.

At step 3102, the DCI indication field is parsed based on the determined bit width and/or indication manner of the DCI indication field.

For the detailed description of steps 3101 to 3102, reference may be made to the description in the above embodiments.

The determination method involved in the embodiments of the present disclosure may include at least one of steps S3101 to S3102. For example, step S3101 may be implemented as an independent embodiment, and step S3102 may be implemented as an independent embodiment, but the determination method involved in the embodiments of the present disclosure is not limited thereto.

In this implementation or embodiment, unless there is any contradiction, individual steps may be independent, arbitrarily combined or exchanged in order, and the optional implementations or embodiments may be arbitrarily combined and may be arbitrarily combined with other implementations or embodiments.

FIG. 3B is a schematic diagram illustrating the interaction flow of a determination method according to an embodiment of the present disclosure. As shown in FIG. 3B, embodiments of the present disclosure relate to a determination method performed by the terminal 101, and the method includes the following step.

At step 3201, a bit width and/or an indication manner of a DCI indication field are/is determined based on at least one of a transmission mode, a maximum number of transmission layers, or a maximum number of PTRS ports in a case where a transmission scheme is performing, by a PUSCH, an MTRP transmission in an uplink STxMP configuration scenario.

Optionally, the MTRP transmission in the STxMP configuration scenario includes simultaneously performing, by two antenna panels of a terminal, PUSCH transmissions to two different TRP directions, where the PUSCH transmissions in different TRP directions are associated with different sets of SRS resources and different TCI states.

The transmission mode includes an SDM transmission or an SFN transmission.

The DCI indication field indicates an association relationship between ports, and the association relationship between the ports includes an association relationship between a PTRS port and a DMRS port.

Optionally, the method further includes: determining an execution of the MTRP transmission based on an SRI field in a DCI signaling.

Optionally, the method further includes: determining the transmission mode of the MTRP transmission to be an SDM transmission or an SFN transmission based on an RRC signaling.

Optionally, the maximum number of transmission layers is the maximum number of transmission layers corresponding to each SRS resource set, each TRP, each antenna panel, or each TCI state; and the maximum number of PTRS ports is the maximum number of PTRS ports sent by a terminal, where the number of PTRS ports corresponding to different SRS resource sets, different TRPs, different antenna panels, or different TCI states from the terminal is the same.

Optionally, in a case where the transmission mode is an SDM transmission, the maximum number of PTRS ports is 2, the actual number of PTRS ports sent by a terminal is 2, each SRS resource set, each TRP, each antenna panel, or each TCI state corresponds to one PTRS port, and different SRS resource sets, different TRPs, different antenna panels, or different TCI states correspond to different PTRS ports for transmissions.

Optionally, determining the bit width and/or the indication manner of the DCI indication field based on at least one of the transmission mode, the maximum number of transmission layers, or the maximum number of PTRS ports includes: in a case where the transmission mode is an SDM transmission and the maximum number of transmission layers configured for the SDM transmission is 1, an actual number of PTRS ports sent by a terminal being 2, determining the bit width and/or the indication manner of the DCI indication field being any one of: the bit width of the DCI indication field being 0 bits; the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 1 corresponding to a second SRS resource set, a second TRP, a second antenna panel, or a second TCI state in the STxMP configuration scenario; or the bit width of the DCI indication field being 1 bit, the DCI indication field indicating an DMRS port associated with a PTRS port corresponding to an SRS resource set, a TRP, an antenna panel, or a TCI state in the STxMP configuration scenario.

Optionally, determining the bit width and/or the indication manner of the DCI indication field based on at least one of the transmission mode, the maximum number of transmission layers, or the maximum number of PTRS ports includes: in a case where the transmission mode is an SDM transmission and the maximum number of transmission layers configured for the SDM transmission is 2, an actual number of PTRS ports sent by a terminal being 2, determining an actual number of transmission layers corresponding to each SRS resource set, each TRP, each antenna panel, or each TCI state; in a case where the actual number of transmission layers corresponding to each SRS resource set, each TRP, each antenna panel, or each TCI state is 2, determining the bit width of the DCI indication field to be 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 1 corresponding to a second SRS resource set, a second TRP, a second antenna panel, or a second TCI state in the STxMP configuration scenario; in a case where the actual number of transmission layers corresponding to each SRS resource set, each TRP, each antenna panel, or each TCI state is 1, determining the bit width and/or the indication manner of the DCI indication field being any one of: the bit width of the DCI indication field being 0 bits; the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 1 corresponding to a second SRS resource set, a second TRP, a second antenna panel, or a second TCI state in the STxMP configuration scenario; or the bit width of the DCI indication field being 1 bit, the DCI indication field indicating a DMRS port associated with a PTRS port corresponding to an SRS resource set, a TRP, an antenna panel, or a TCI state in the STxMP configuration scenario; in a case where the actual number of transmission layers corresponding to a first SRS resource set, a first TRP, a first antenna panel, or a first TCI state is 1, and an actual number of transmission layers corresponding to a second SRS resource set, a second TRP, a second antenna panel, or a second TCI state is 2; or in a case where an actual number of transmission layers corresponding to a first SRS resource set, a first TRP, a first antenna panel, or a first TCI state is 2, and an actual number of transmission layers corresponding to a second SRS resource set, a second TRP, a second antenna panel, or a second TCI state is 1, determining the bit width and/or the indication manner of the DCI indication field being any one of: the bit width of the DCI indication field being 2 bits, an MSB of the DCI indication field indicating a DMRS port associated with a PTRS port 0 corresponding to the first SRS resource set, the first TRP, the first antenna panel, or the first TCI state in the STxMP configuration scenario, an LSB of the DCI indication field indicating a DMRS port associated with a PTRS port 1 corresponding to the second SRS resource set, the second TRP, the second antenna panel, or the second TCI state in the STxMP configuration scenario; or the bit width of the DCI indication field being 1 bit, the DCI indication field indicating a DMRS port associated with a PTRS port corresponding to an SRS resource set with an actual number of transmission layers of 2, a TRP with an actual number of transmission layers of 2, an antenna panel with an actual number of transmission layers of 2, or a TCI state with an actual number of transmission layers of 2.

Optionally, in a case where the transmission mode is an SFN transmission, the number of PTRS ports corresponding to different SRS resource sets, different TRPs, different antenna panels, or different TCI states is the same, and the same PTRS port corresponding to different SRS resource sets, different TRPs, different antenna panels, or different TCI states is associated with the same DMRS port or different DMRS ports.

Optionally, determining the bit width and/or the indication manner of the DCI indication field based on at least one of the transmission mode, the maximum number of transmission layers, or the maximum number of PTRS ports includes: in a case where the transmission mode is an SFN transmission, the maximum number of transmission layers configured for the SFN transmission is 1, and the maximum number of PTRS ports configured for the SFN transmission is 1, an actual number of PTRS ports sent by a terminal being 1, determining the bit width and/or the indication manner of the DCI indication field being any one of: the bit width of the DCI indication field being 0 bits; the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 0 corresponding to a second SRS resource set, a second TRP, a second antenna panel, or a second TCI state in the STxMP configuration scenario; or the bit width of the DCI indication field being 1 bit, the DCI indication field indicating a DMRS port associated with a PTRS port corresponding to an SRS resource set, a TRP, an antenna panel, or a TCI state in the STxMP configuration scenario.

Optionally, determining the bit width and/or the indication manner of the DCI indication field based on at least one of the transmission mode, the maximum number of transmission layers, or the maximum number of PTRS ports includes: in a case where the transmission mode is an SFN transmission, the maximum number of transmission layers configured for the SFN transmission is 2, and the maximum number of PTRS ports configured for the SFN transmission is 1, an actual number of PTRS ports sent by a terminal being 1, determining an actual number of transmission layers for each SRS resource set, each TRP, each antenna panel, or each TCI state; in a case where the actual number of transmission layers corresponding to each SRS resource set, each TRP, each antenna panel, or each TCI state is 1, determining the bit width and/or the indication manner of the DCI indication field being any one of: the bit width of the DCI indication field being 0 bits; the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 0 corresponding to a second SRS resource set, a second TRP, a second antenna panel, or a second TCI state in the STxMP configuration scenario; or the bit width of the DCI indication field being 1 bit, the DCI indication field indicating a DMRS port associated with a PTRS port corresponding to an SRS resource set, a TRP, an antenna panel, or a TCI state in the STxMP configuration scenario; in a case where the actual number of transmission layers corresponding to each SRS resource set, each TRP, each antenna panel, or each TCI state is 2, and the same PTRS port corresponding to different SRS resource sets, different TRPs, different antenna panels, or different TCI states is associated with the same DMRS port, determining the bit width and/or the indication manner of the DCI indication field being any one of: the bit width of the DCI indication field being 1 bit, the DCI indication field indicating a DMRS port associated with a PTRS port corresponding to an SRS resource set, a TRP, an antenna panel, or a TCI state in the STxMP configuration scenario; or the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 0 corresponding to a second SRS resource set, a second TRP, a second antenna panel, or a second TCI state in the STxMP configuration scenario.

Optionally, determining the bit width and/or the indication manner of the DCI indication field based on at least one of the transmission mode, the maximum number of transmission layers, or the maximum number of PTRS ports includes: in a case where the transmission mode is the SFN transmission, the maximum number of transmission layers configured for the SFN transmission is 2, and the maximum number of PTRS ports configured for the SFN transmission is 1, the actual number of PTRS ports sent by the terminal being 1, determining an actual number of transmission layers corresponding to each SRS resource set, each TRP, each antenna panel, or each TCI state; and in a case where the actual number of transmission layers corresponding to each SRS resource set, each TRP, each antenna panel, or each TCI state is 2, and the same PTRS port corresponding to different SRS resource sets, different TRPs, different antenna panels, or different TCI states is associated with different DMRS ports, determining the bit width and/or the indication manner of the DCI indication field being any one of: the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating another DMRS port associated with the PTRS port 0 corresponding to a second SRS resource set, a second TRP, a second antenna panel, or a second TCI state in the STxMP configuration scenario; or the bit width of the DCI indication field being 1 bit, the DCI indication field indicating a DMRS port associated with a PTRS port corresponding to an SRS resource set, a TRP, an antenna panel, or a TCI state in the STxMP configuration scenario.

Optionally, determining the bit width and/or the indication manner of the DCI indication field based on at least one of the transmission mode, the maximum number of transmission layers, or the maximum number of PTRS ports includes: in a case where the transmission mode is an SFN transmission, the maximum number of transmission layers configured for the SFN transmission is 2, and the maximum number of PTRS ports configured for the SFN transmission is 2, determining an actual number of PTRS ports sent by a terminal; in a case where the actual number of PTRS ports sent by the terminal is 1, determining an actual number of transmission layers for each SRS resource set, each TRP, each antenna panel, or each TCI state; in a case where the actual number of transmission layers corresponding to each SRS resource set, each TRP, each antenna panel, or each TCI state is 1, determining the bit width and/or the indication manner of the DCI indication field being any one of: the bit width of the DCI indication field being 0 bits; the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 0 corresponding to a second SRS resource set, a second TRP, a second antenna panel, or a second TCI state in the STxMP configuration scenario; or the bit width of the DCI indication field being 1 bit, the DCI indication field indicating a DMRS port associated with a PTRS port 0 corresponding to an SRS resource set, a TRP, an antenna panel, or a TCI state in the STxMP configuration scenario; in a case where an actual number of transmission layers corresponding to each SRS resource set, each TRP, each antenna panel, or each TCI state is 2, and the same PTRS port corresponding to different SRS resource sets, different TRPs, different antenna panels, or different TCI states is associated with the same DMRS port, determining the bit width and/or the indication manner of the DCI indication field being any one of: the bit width of the DCI indication field being 1 bit, the DCI indication field indicating a DMRS port associated with a PTRS port corresponding to an SRS resource set, a TRP, an antenna panel, or a TCI state in the STxMP configuration scenario; or the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 0 corresponding to a second SRS resource set, a second TRP, a second antenna panel, or a second TCI state in the STxMP configuration scenario; in a case where the actual number of transmission layers corresponding to each SRS resource set, each TRP, each antenna panel, or each TCI state is 2, and the same PTRS port corresponding to different SRS resource sets, different TRPs, different antenna panels, or different TCI states is associated with different DMRS ports, determining the bit width and/or the indication manner of the DCI indication field being any one of: the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating another DMRS port associated with the PTRS port 0 corresponding to a second SRS resource set, a second TRP, a second antenna panel, or a second TCI state in the STxMP configuration scenario; or the bit width of the DCI indication field being 1 bit, the DCI indication field indicating a DMRS port associated with a PTRS port corresponding to an SRS resource set, a TRP, an antenna panel, or a TCI state in the STxMP configuration scenario.

Optionally, determining the bit width and/or the indication manner of the DCI indication field based on at least one of the transmission mode, the maximum number of transmission layers, or the maximum number of PTRS ports includes: in a case where the transmission mode is an SFN transmission, the maximum number of transmission layers configured for the SFN transmission is 2, and the maximum number of PTRS ports configured for the SFN transmission is 2, determining an actual number of PTRS ports sent by a terminal; in a case where the actual number of PTRS ports sent by the terminal is 2, and the same PTRS port corresponding to different SRS resource sets, different TRPs, different antenna panels, or different TCI states is associated with the same DMRS port, determining the bit width and/or the indication manner of the DCI indication field being any one of: the bit width of the DCI indication field being 1 bit, the DCI indication field indicating a DMRS port associated with a PTRS port corresponding to an SRS resource set, a TRP, an antenna panel, or a TCI state in the STxMP configuration scenario; the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 1 corresponding to the first SRS resource set, the first TRP, the first antenna panel, or the first TCI state in the STxMP configuration scenario; the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 0 corresponding to a second SRS resource set, a second TRP, a second antenna panel, or a second TCI state in the STxMP configuration scenario; or the bit width of the DCI indication field being 4 bits, first two bits of the DCI indication field indicating DMRS ports associated with two PTRS ports corresponding to a first SRS resource set, a first TRP, a first antenna panel, or a first TCI state in the STxMP configuration scenario; last two bits of the DCI indication field indicating DMRS ports associated with two PTRS ports corresponding to a second SRS resource set, a second TRP, a second antenna panel, or a second TCI state in the STxMP configuration scenario.

Optionally, determining the bit width and/or the indication manner of the DCI indication field based on at least one of the transmission mode, the maximum number of transmission layers, or the maximum number of PTRS ports includes: in a case where the transmission mode is an SFN transmission, the maximum number of transmission layers configured for the SFN transmission is 2, and the maximum number of PTRS ports configured for the SFN transmission is 2, determining an actual number of PTRS ports sent by a terminal; in a case where the actual number of PTRS ports sent by the terminal is 2, and the same PTRS port corresponding to different SRS resource sets, different TRPs, different antenna panels, or different TCI states is associated with different DMRS ports, determining the bit width and/or the indication manner of the DCI indication field being any one of: the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 0 corresponding to a second SRS resource set, a second TRP, a second antenna panel, or a second TCI state in the STxMP configuration scenario; or the bit width of the DCI indication field being 4 bits, first two bits of the DCI indication field indicating DMRS ports associated with two PTRS ports corresponding to a first SRS resource set, a first TRP, a first antenna panel, or a first TCI state in the STxMP configuration scenario; last two bits of the DCI indication field indicating DMRS ports associated with two PTRS ports corresponding to a second SRS resource set, a second TRP, a second antenna panel, or a second TCI state in the STxMP configuration scenario.

Optionally, determining the actual number of PTRS ports sent by the terminal includes: determining a target SRS resource set, a target TRP, a target antenna panel, or a target TCI state from two SRS resource sets, two TRPs, two antenna panels, or two TCI states based on at least one of a predefined rule, a network configuration, or a network indication; determining the actual number of PTRS ports for the target SRS resource set, the target TRP, the target antenna panel, or the target TCI state as the actual number of PTRS ports sent by the terminal.

For the detailed description of step 3201, reference may be made to the description in the above embodiments.

In this implementation or embodiment, unless there is any contradiction, individual steps may be independent, arbitrarily combined or exchanged in order, and the optional implementations or embodiments may be arbitrarily combined and may be arbitrarily combined with other implementations or embodiments.

FIG. 4A is a schematic diagram illustrating the interaction flow of a determination method according to an embodiment of the present disclosure. As shown in FIG. 4A, embodiments of the present disclosure relate to a determination method performed by the network device 102, and the method includes the following steps.

At step 4101, a bit width and/or an indication manner of a DCI indication field are/is determined based on at least one of a transmission mode, a maximum number of transmission layers, or a maximum number of PTRS ports in a case where a transmission scheme is performing, by a PUSCH, an MTRP transmission in an uplink STxMP configuration scenario.

At step 4102, the transmission scheme and/or the transmission mode are/is indicated.

For the detailed description of steps 4101 to 4102, reference may be made to the description in the above embodiments.

The determination method involved in the embodiments of the present disclosure may include at least one of steps S4101 to S4102. For example, step S4101 may be implemented as an independent embodiment, and step S4102 may be implemented as an independent embodiment, but the determination method involved in the embodiments of the present disclosure is not limited thereto.

In this implementation or embodiment, unless there is any contradiction, individual steps may be independent, arbitrarily combined or exchanged in order, and the optional implementations or embodiments may be arbitrarily combined and may be arbitrarily combined with other implementations or embodiments.

FIG. 4B is a schematic diagram illustrating the interaction flow of a determination method according to an embodiment of the present disclosure. As shown in FIG. 4B, embodiments of the present disclosure relate to a determination method performed by the network device 102, and the method includes the following step.

At step 4201, a bit width and/or an indication manner of a DCI indication field are/is determined based on at least one of a transmission mode, a maximum number of transmission layers, or a maximum number of PTRS ports in a case where a transmission scheme is performing, by a PUSCH, an MTRP transmission in an uplink STxMP configuration scenario.

Optionally, the MTRP transmission in the STxMP configuration scenario includes simultaneously performing, by two antenna panels of a terminal, PUSCH transmissions to two different TRP directions, where the PUSCH transmissions in different TRP directions are associated with different sets of SRS resources and different TCI states.

The transmission mode includes an SDM transmission or an SFN transmission.

The DCI indication field indicates an association relationship between ports, and the association relationship between the ports includes an association relationship between a PTRS port and a DMRS port.

Optionally, the method further includes: determining an execution of the MTRP transmission based on an SRI field in a DCI signaling.

Optionally, the method further includes: determining the transmission mode of the MTRP transmission to be an SDM transmission or an SFN transmission based on an RRC signaling.

Optionally, the maximum number of transmission layers is the maximum number of transmission layers corresponding to each SRS resource set, each TRP, each antenna panel, or each TCI state; and the maximum number of PTRS ports is the maximum number of PTRS ports sent by a terminal, where the number of PTRS ports corresponding to different SRS resource sets, different TRPs, different antenna panels, or different TCI states from the terminal is the same.

Optionally, in a case where the transmission mode is an SDM transmission, the maximum number of PTRS ports is 2, the actual number of PTRS ports sent by a terminal is 2, each SRS resource set, each TRP, each antenna panel, or each TCI state corresponds to one PTRS port, and different SRS resource sets, different TRPs, different antenna panels, or different TCI states correspond to different PTRS ports for transmissions.

Optionally, determining the bit width and/or the indication manner of the DCI indication field based on at least one of the transmission mode, the maximum number of transmission layers, or the maximum number of PTRS ports includes: in a case where the transmission mode is an SDM transmission and the maximum number of transmission layers configured for the SDM transmission is 1, an actual number of PTRS ports sent by a terminal being 2, determining the bit width and/or the indication manner of the DCI indication field being any one of: the bit width of the DCI indication field being 0 bits; the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 1 corresponding to a second SRS resource set, a second TRP, a second antenna panel, or a second TCI state in the STxMP configuration scenario; or the bit width of the DCI indication field being 1 bit, the DCI indication field indicating an DMRS port associated with a PTRS port corresponding to an SRS resource set, a TRP, an antenna panel, or a TCI state in the STxMP configuration scenario.

Optionally, determining the bit width and/or the indication manner of the DCI indication field based on at least one of the transmission mode, the maximum number of transmission layers, or the maximum number of PTRS ports includes: in a case where the transmission mode is an SDM transmission and the maximum number of transmission layers configured for the SDM transmission is 2, an actual number of PTRS ports sent by a terminal being 2, determining an actual number of transmission layers corresponding to each SRS resource set, each TRP, each antenna panel, or each TCI state; in a case where the actual number of transmission layers corresponding to each SRS resource set, each TRP, each antenna panel, or each TCI state is 2, determining the bit width of the DCI indication field to be 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 1 corresponding to a second SRS resource set, a second TRP, a second antenna panel, or a second TCI state in the STxMP configuration scenario; in a case where the actual number of transmission layers corresponding to each SRS resource set, each TRP, each antenna panel, or each TCI state is 1, determining the bit width and/or the indication manner of the DCI indication field being any one of: the bit width of the DCI indication field being 0 bits; the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 1 corresponding to a second SRS resource set, a second TRP, a second antenna panel, or a second TCI state in the STxMP configuration scenario; or the bit width of the DCI indication field being 1 bit, the DCI indication field indicating a DMRS port associated with a PTRS port corresponding to an SRS resource set, a TRP, an antenna panel, or a TCI state in the STxMP configuration scenario; in a case where the actual number of transmission layers corresponding to a first SRS resource set, a first TRP, a first antenna panel, or a first TCI state is 1, and an actual number of transmission layers corresponding to a second SRS resource set, a second TRP, a second antenna panel, or a second TCI state is 2; or in a case where an actual number of transmission layers corresponding to a first SRS resource set, a first TRP, a first antenna panel, or a first TCI state is 2, and an actual number of transmission layers corresponding to a second SRS resource set, a second TRP, a second antenna panel, or a second TCI state is 1, determining the bit width and/or the indication manner of the DCI indication field being any one of: the bit width of the DCI indication field being 2 bits, an MSB of the DCI indication field indicating a DMRS port associated with a PTRS port 0 corresponding to the first SRS resource set, the first TRP, the first antenna panel, or the first TCI state in the STxMP configuration scenario, an LSB of the DCI indication field indicating a DMRS port associated with a PTRS port 1 corresponding to the second SRS resource set, the second TRP, the second antenna panel, or the second TCI state in the STxMP configuration scenario; or the bit width of the DCI indication field being 1 bit, the DCI indication field indicating a DMRS port associated with a PTRS port corresponding to an SRS resource set with an actual number of transmission layers of 2, a TRP with an actual number of transmission layers of 2, an antenna panel with an actual number of transmission layers of 2, or a TCI state with an actual number of transmission layers of 2.

Optionally, in a case where the transmission mode is an SFN transmission, the number of PTRS ports corresponding to different SRS resource sets, different TRPs, different antenna panels, or different TCI states is the same, and the same PTRS port corresponding to different SRS resource sets, different TRPs, different antenna panels, or different TCI states is associated with the same DMRS port or different DMRS ports.

Optionally, determining the bit width and/or the indication manner of the DCI indication field based on at least one of the transmission mode, the maximum number of transmission layers, or the maximum number of PTRS ports includes: in a case where the transmission mode is an SFN transmission, the maximum number of transmission layers configured for the SFN transmission is 1, and the maximum number of PTRS ports configured for the SFN transmission is 1, an actual number of PTRS ports sent by a terminal being 1, determining the bit width and/or the indication manner of the DCI indication field being any one of: the bit width of the DCI indication field being 0 bits; the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 0 corresponding to a second SRS resource set, a second TRP, a second antenna panel, or a second TCI state in the STxMP configuration scenario; or the bit width of the DCI indication field being 1 bit, the DCI indication field indicating a DMRS port associated with a PTRS port corresponding to an SRS resource set, a TRP, an antenna panel, or a TCI state in the STxMP configuration scenario.

Optionally, determining the bit width and/or the indication manner of the DCI indication field based on at least one of the transmission mode, the maximum number of transmission layers, or the maximum number of PTRS ports includes: in a case where the transmission mode is an SFN transmission, the maximum number of transmission layers configured for the SFN transmission is 2, and the maximum number of PTRS ports configured for the SFN transmission is 1, an actual number of PTRS ports sent by a terminal being 1, determining an actual number of transmission layers for each SRS resource set, each TRP, each antenna panel, or each TCI state; in a case where the actual number of transmission layers corresponding to each SRS resource set, each TRP, each antenna panel, or each TCI state is 1, determining the bit width and/or the indication manner of the DCI indication field being any one of: the bit width of the DCI indication field being 0 bits; the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 0 corresponding to a second SRS resource set, a second TRP, a second antenna panel, or a second TCI state in the STxMP configuration scenario; or the bit width of the DCI indication field being 1 bit, the DCI indication field indicating a DMRS port associated with a PTRS port corresponding to an SRS resource set, a TRP, an antenna panel, or a TCI state in the STxMP configuration scenario; in a case where the actual number of transmission layers corresponding to each SRS resource set, each TRP, each antenna panel, or each TCI state is 2, and the same PTRS port corresponding to different SRS resource sets, different TRPs, different antenna panels, or different TCI states is associated with the same DMRS port, determining the bit width and/or the indication manner of the DCI indication field being any one of: the bit width of the DCI indication field being 1 bit, the DCI indication field indicating a DMRS port associated with a PTRS port corresponding to an SRS resource set, a TRP, an antenna panel, or a TCI state in the STxMP configuration scenario; or the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 0 corresponding to a second SRS resource set, a second TRP, a second antenna panel, or a second TCI state in the STxMP configuration scenario.

Optionally, determining the bit width and/or the indication manner of the DCI indication field based on at least one of the transmission mode, the maximum number of transmission layers, or the maximum number of PTRS ports includes: in a case where the transmission mode is the SFN transmission, the maximum number of transmission layers configured for the SFN transmission is 2, and the maximum number of PTRS ports configured for the SFN transmission is 1, the actual number of PTRS ports sent by the terminal being 1, determining an actual number of transmission layers corresponding to each SRS resource set, each TRP, each antenna panel, or each TCI state; and in a case where the actual number of transmission layers corresponding to each SRS resource set, each TRP, each antenna panel, or each TCI state is 2, and the same PTRS port corresponding to different SRS resource sets, different TRPs, different antenna panels, or different TCI states is associated with different DMRS ports, determining the bit width and/or the indication manner of the DCI indication field being any one of: the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating another DMRS port associated with the PTRS port 0 corresponding to a second SRS resource set, a second TRP, a second antenna panel, or a second TCI state in the STxMP configuration scenario; or the bit width of the DCI indication field being 1 bit, the DCI indication field indicating a DMRS port associated with a PTRS port corresponding to an SRS resource set, a TRP, an antenna panel, or a TCI state in the STxMP configuration scenario.

Optionally, determining the bit width and/or the indication manner of the DCI indication field based on at least one of the transmission mode, the maximum number of transmission layers, or the maximum number of PTRS ports includes: in a case where the transmission mode is an SFN transmission, the maximum number of transmission layers configured for the SFN transmission is 2, and the maximum number of PTRS ports configured for the SFN transmission is 2, determining an actual number of PTRS ports sent by a terminal; in a case where the actual number of PTRS ports sent by the terminal is 1, determining an actual number of transmission layers for each SRS resource set, each TRP, each antenna panel, or each TCI state; in a case where the actual number of transmission layers corresponding to each SRS resource set, each TRP, each antenna panel, or each TCI state is 1, determining the bit width and/or the indication manner of the DCI indication field being any one of: the bit width of the DCI indication field being 0 bits; the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 0 corresponding to a second SRS resource set, a second TRP, a second antenna panel, or a second TCI state in the STxMP configuration scenario; or the bit width of the DCI indication field being 1 bit, the DCI indication field indicating a DMRS port associated with a PTRS port 0 corresponding to an SRS resource set, a TRP, an antenna panel, or a TCI state in the STxMP configuration scenario; in a case where an actual number of transmission layers corresponding to each SRS resource set, each TRP, each antenna panel, or each TCI state is 2, and the same PTRS port corresponding to different SRS resource sets, different TRPs, different antenna panels, or different TCI states is associated with the same DMRS port, determining the bit width and/or the indication manner of the DCI indication field being any one of: the bit width of the DCI indication field being 1 bit, the DCI indication field indicating a DMRS port associated with a PTRS port corresponding to an SRS resource set, a TRP, an antenna panel, or a TCI state in the STxMP configuration scenario; or the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 0 corresponding to a second SRS resource set, a second TRP, a second antenna panel, or a second TCI state in the STxMP configuration scenario; in a case where the actual number of transmission layers corresponding to each SRS resource set, each TRP, each antenna panel, or each TCI state is 2, and the same PTRS port corresponding to different SRS resource sets, different TRPs, different antenna panels, or different TCI states is associated with different DMRS ports, determining the bit width and/or the indication manner of the DCI indication field being any one of: the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating another DMRS port associated with the PTRS port 0 corresponding to a second SRS resource set, a second TRP, a second antenna panel, or a second TCI state in the STxMP configuration scenario; or the bit width of the DCI indication field being 1 bit, the DCI indication field indicating a DMRS port associated with a PTRS port corresponding to an SRS resource set, a TRP, an antenna panel, or a TCI state in the STxMP configuration scenario.

Optionally, determining the bit width and/or the indication manner of the DCI indication field based on at least one of the transmission mode, the maximum number of transmission layers, or the maximum number of PTRS ports includes: in a case where the transmission mode is an SFN transmission, the maximum number of transmission layers configured for the SFN transmission is 2, and the maximum number of PTRS ports configured for the SFN transmission is 2, determining an actual number of PTRS ports sent by a terminal; in a case where the actual number of PTRS ports sent by the terminal is 2, and the same PTRS port corresponding to different SRS resource sets, different TRPs, different antenna panels, or different TCI states is associated with the same DMRS port, determining the bit width and/or the indication manner of the DCI indication field being any one of: the bit width of the DCI indication field being 1 bit, the DCI indication field indicating a DMRS port associated with a PTRS port corresponding to an SRS resource set, a TRP, an antenna panel, or a TCI state in the STxMP configuration scenario; the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 1 corresponding to the first SRS resource set, the first TRP, the first antenna panel, or the first TCI state in the STxMP configuration scenario; the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 0 corresponding to a second SRS resource set, a second TRP, a second antenna panel, or a second TCI state in the STxMP configuration scenario; or the bit width of the DCI indication field being 4 bits, first two bits of the DCI indication field indicating DMRS ports associated with two PTRS ports corresponding to a first SRS resource set, a first TRP, a first antenna panel, or a first TCI state in the STxMP configuration scenario; last two bits of the DCI indication field indicating DMRS ports associated with two PTRS ports corresponding to a second SRS resource set, a second TRP, a second antenna panel, or a second TCI state in the STxMP configuration scenario.

Optionally, determining the bit width and/or the indication manner of the DCI indication field based on at least one of the transmission mode, the maximum number of transmission layers, or the maximum number of PTRS ports includes: in a case where the transmission mode is an SFN transmission, the maximum number of transmission layers configured for the SFN transmission is 2, and the maximum number of PTRS ports configured for the SFN transmission is 2, determining an actual number of PTRS ports sent by a terminal; in a case where the actual number of PTRS ports sent by the terminal is 2, and the same PTRS port corresponding to different SRS resource sets, different TRPs, different antenna panels, or different TCI states is associated with different DMRS ports, determining the bit width and/or the indication manner of the DCI indication field being any one of: the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 0 corresponding to a second SRS resource set, a second TRP, a second antenna panel, or a second TCI state in the STxMP configuration scenario; or the bit width of the DCI indication field being 4 bits, first two bits of the DCI indication field indicating DMRS ports associated with two PTRS ports corresponding to a first SRS resource set, a first TRP, a first antenna panel, or a first TCI state in the STxMP configuration scenario; last two bits of the DCI indication field indicating DMRS ports associated with two PTRS ports corresponding to a second SRS resource set, a second TRP, a second antenna panel, or a second TCI state in the STxMP configuration scenario.

Optionally, determining the actual number of PTRS ports sent by the terminal includes: determining a target SRS resource set, a target TRP, a target antenna panel, or a target TCI state from two SRS resource sets, two TRPs, two antenna panels, or two TCI states based on at least one of a predefined rule, a network configuration, or a network indication; determining the actual number of PTRS ports for the target SRS resource set, the target TRP, the target antenna panel, or the target TCI state as the actual number of PTRS ports sent by the terminal.

Optionally, the method further includes: in a case where the SFN transmission is performed based on a codebook, determining the actual number of PTRS ports for the target SRS resource set, the target TRP, the target antenna panel, or the target TCI state based on a TPMI configured by a network device for the target SRS resource set, the target TRP, the target antenna panel, or the target TCI state; and in a case where the SFN transmission is performed based on a non-codebook, determining the actual number of PTRS ports for the target SRS resource set, the target TRP, the target antenna panel, or the target TCI state based on a PTRS index indicated by an SRI field corresponding to the target SRS resource set, the target TRP, the target antenna panel, or the target TCI state in a DCI signaling.

For the detailed description of step 4201, reference may be made to the description in the above embodiments.

In this implementation or embodiment, unless there is any contradiction, individual steps may be independent, arbitrarily combined or exchanged in order, and the optional implementations or embodiments may be arbitrarily combined and may be arbitrarily combined with other implementations or embodiments.

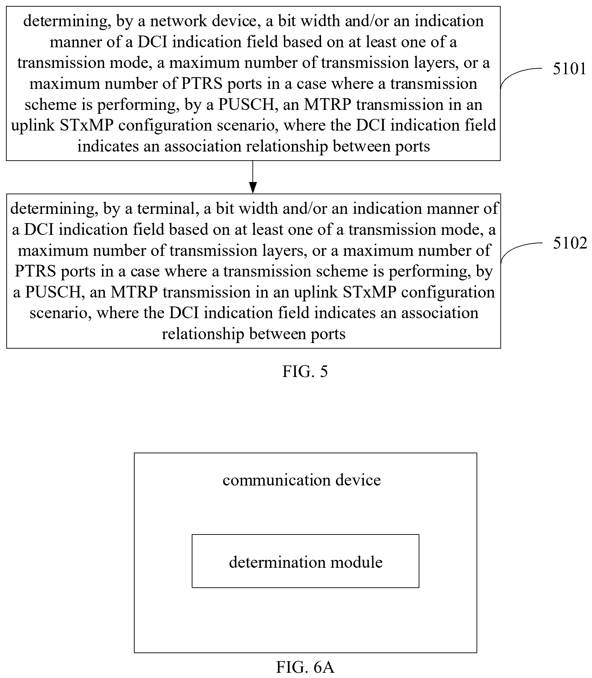

FIG. 5 is a schematic flowchart illustrating a determination method according to an embodiment of the present disclosure. As shown in FIG. 5, embodiments of the present disclosure relate to a determination method performed by a communication system, and the method includes at least one of the following steps.

At step 5101, a bit width and/or an indication manner of a first DCI indication field are/is determined by a network device based on at least one of a transmission mode, a maximum number of transmission layers, or a maximum number of PTRS ports in a case where a transmission scheme is performing, by a PUSCH, an MTRP transmission in an uplink STxMP configuration scenario, where the DCI indication field indicates an association relationship between ports.

At step 5102, a bit width and/or an indication manner of a first DCI indication field are/is determined by a terminal based on at least one of a transmission mode, a maximum number of transmission layers, or a maximum number of PTRS ports in a case where a transmission scheme is performing, by a PUSCH, an MTRP transmission in an uplink STxMP configuration scenario, where the DCI indication field indicates an association relationship between ports.

Regarding optional implementations of steps 5101 to 5102, reference may be made to the description in the above embodiments.

In some embodiments, the above-mentioned method may include the methods in the embodiments on the above-mentioned communication system side, the above-mentioned terminal side, the above-mentioned network device side, and the like, which will not be elaborated here.

The determination method involved in the embodiments of the present disclosure may include at least one of steps S5101 to S5102. For example, step S5101 may be implemented as an independent embodiment, and step S5102 may be implemented as an independent embodiment, but the determination method involved in the embodiments of the present disclosure is not limited thereto.

In this implementation or embodiment, unless there is any contradiction, individual steps may be independent, arbitrarily combined or exchanged in order, and the optional implementations or embodiments may be arbitrarily combined and may be arbitrarily combined with other implementations or embodiments.

An illustrative description of the above-mentioned method will be provided below.

The specific implementation scheme for determining an indication manner of a PTRS-DMRS association indication field in an STxMP transmission is as follows.

The indication manner of the PTRS-DMRS association indication field is determined based on different transmission schemes.

When the network is configured with PTRS transmission UL-PTRS-present enabled, the following applies.

For a codebook-based single-TRP transmission, when maxRank = 1 to 4, the number of bits is specifically determined based on different codebook subsets, the actual TPMI & transmit rank indicator (TRI), and the configured maximum number of PTRS ports. The actual number of PTRS ports used and the specific associated DMRS ports are determined. The corresponding indication manner of the DCI indication field and the bit field correspond to different cases where the number of bits is between 0 and 2 bits (legacy).

For a codebook-based SDM transmission, the following applies.

When maxRank' = 1, the following possible solutions exist.

Alt.1: Regardless of how the codebook subset is configured, this indication field does not exist, and the corresponding number of bits is 0.

Alt.2: This indication field has 2 bits, an MSB indicates a PTRS port 0, and an LSB indicates a PTRS port 1.

Alt.3: Based on Alt.2, this indication field has 1 bit. Only 1 bit indicates a PTRS port 0. A PTRS port 1 is defaulted and is associated with the default by a DMRS configuration.

When maxRank' = 2, the following possible solution exists.

This indication field has 2 bits, an MSB indicates a PTRS port 0, and an LSB indicates a PTRS port 1.

For a codebook (CB)-based SFN transmission, the following applies.

When maxRank' = 1, the following possible solutions exist.

Alt.1: Regardless of how the codebook subset is configured, if this indication field does not exist, the number of bits in this indication field is 0.

When maxRank' = 2, the following possible solutions exist.

When the maximum number of PTRS ports is 1, the following possible solutions exist.

Alt.1: This indication field has 1 bit (when a PTRS is for an SFN).

Alt.2: This indication field has 2 bits (when a PTRS is not for an SFN).

When the maximum number of PTRS ports is 2, the following possible solutions exist.

Alt.1: This indication field has 2 bits, and the actual number of PTRS ports is determined according to the default rule (e.g., TPMI#1); an MSB indicates a PTRS port 0, and an LSB indicates a PTRS port 1 (when a PTRS is for an SFN).

Alt.2: This indication field has 1 bit, and the actual number of PTRS ports is determined according to the default rule (e.g., TPMI#1); and 1 bit indicates a PTRS port 0 (when a PTRS is for an SFN).

Alt.3: This indication field has 2 bits; and the actual number of PTRS ports is determined according to the default rule (e.g., TPMI#1); an MSB indicates a PTRS port 0, and an LSB indicates a PTRS port 1 (when a PTRS is not for an SFN).

For a non-codebook (NCB)-based SDM/SFN transmission, a PTRS index configured by an SRS is ignored, and specific rules may similar to those in the CB transmission.

The embodiments of the present disclosure further provide a device for implementing any one of the above methods. For example, a device is provided, which includes units or modules for implementing steps performed by the terminal in any one of the above methods. For another example, another device is provided, which includes units or modules for implementing steps performed by a network device (such as an access network device, a core network functional node, a core network device, or the like) in any one of the above methods.

It should be understood that the division of the units or modules in the above device is only a logical functional division. In actual implementation, the units or modules may be fully or partially integrated into a physical entity, or may be physically separated. Furthermore, the units or modules in the device may be implemented in the form of calling software by a processor, for example, the device includes a processor, the processor is connected to a memory, the memory has stored therein instructions, and the processor calls the instructions stored in the memory to implement any one of the above methods or to implement the functions of the units or modules of the above device. The processor is, for example, a general-purpose processor, such as a central processing unit (CPU) or a microprocessor, and the memory is either internal to the device or external to the device. Alternatively, the units or modules in the device may be implemented in the form of hardware circuits. The functions of some or all of the units or modules may be achieved by designing the hardware circuits. The above-mentioned hardware circuits may be understood as one or more processors. For example, in an implementation, the above-mentioned hardware circuit is an application-specific integrated circuit (ASIC). The functions of some or all of the above-mentioned units or modules are achieved by designing the logical relationships between the components within the circuit. As another example, in another implementation, the above-mentioned hardware circuit may be implemented by a programmable logic device (PLD). Taking a field programmable gate array (FPGA) as an example, it may include a large number of logic gates. The connection relationships between the logic gates are configured via configuration files, thereby achieving the functions of some or all of the above-mentioned units or modules. All units or modules of the above device may be implemented entirely in the form of calling software by the processor, or entirely by hardware circuits, or partially in the form of calling software by the processor and the rest by hardware circuits.

In the embodiments of the present disclosure, the processor is a circuit with signal processing functions. In an implementation, the processor may be a circuit with instruction reading and running functions, such as a CPU, a microprocessor, a graphics processing unit (GPU) (which may be understood as a microprocessor), or a digital signal processor (DSP). In another implementation, the processor may implement certain functions by means of the logical relationship of hardware circuits. The logical relationship of the above-mentioned hardware circuits is fixed or reconfigurable. For example, the processor is a hardware circuit implemented by an ASIC or a PLD, such as an FPGA. In a reconfigurable hardware circuit, the process of loading, by the processor, a configuration document to implement the hardware circuit configuration may be understood as the process of loading, by the processor, instructions to implement the functions of some or all of the above units or modules. In addition, the processor is may also be a hardware circuit designed for artificial intelligence, which may be understood as ASIC, such as a neural network processing unit (NPU), a tensor processing unit (TPU), a deep learning processing unit (DPU), or the like.

FIG. 6A is a schematic block diagram of a terminal or network device provided in an embodiment of the present disclosure. As shown in FIG. 6A, the terminal or the network device includes a determination module configured to determine a bit width and/or an indication manner of a first DCI indication field based on at least one of a transmission mode, a maximum number of transmission layers, or a maximum number of PTRS ports in a case where a transmission scheme is performing, by a PUSCH, an MTRP transmission in an uplink STxMP configuration scenario, where the DCI indication field indicates an association relationship between ports. Optionally, the determination module is configured to perform the steps related to "determining" performed in any one of the above methods. Optionally, the terminal or the network device further includes at least one of a receiving module or a sending module. The receiving module is configured to perform the steps related to receiving performed in any one of the above methods, and the sending module is configured to perform the steps related to "sending" performed in any one of the above methods. Further details will not be provided here.

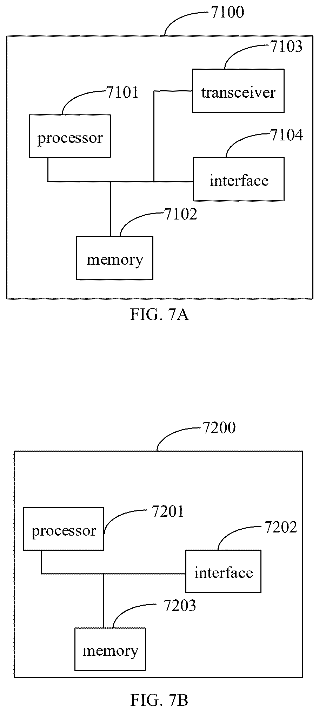

FIG. 7A is a schematic block diagram of a communication device 7100 provided in an embodiment of the present disclosure. The communication device 7100 may be a network device (such as an access network device, a core network device, or the like), a terminal (such as a user equipment, or the like), a chip, chip system, or processor that supports a network device to implement any one of the above methods, or a chip, chip system, or processor that supports a terminal to report and implement any one of the above methods. The communication device 7100 may be configured to implement the methods as described in the above-mentioned method embodiments. For details, reference may be made to the description in the above-mentioned method embodiments.

As shown in FIG. 7A, the communication device 7100 includes one or more processors 7101. The processor 7101 may be a general-purpose processor, a special-purpose processor, or the like. The processor 7101 may be, for example, a baseband processor or a central processor. The baseband processor may be configured to process a communication protocol and communication data, and the central processor may be configured to control a communication device (such as a base station, a baseband chip, a terminal, a terminal chip, a distributed unit (DU), a centralized unit (CU), or the like), execute a program, and process data of the program. The processor 7101 is configured to invoke instructions to enable the communication device 7100 to execute any one of the above methods.

In some embodiments, the communication device 7100 further includes one or more memories 7102 for storing instructions. Alternatively, all or some of the memories 7102 may be located outside the communication device 7100.

In some embodiments, the communication device 7100 further includes one or more transceivers 7103. When the communication device 7100 includes one or more transceivers 7103, the communication steps such as sending and receiving steps in the above methods are performed by the transceiver 7103, and the other steps are performed by the processor 7101.

In some embodiments, the transceiver may include a receiver and a transmitter, and the receiver and the transmitter may be separate or integrated. Optionally, terms such as transceiver, transceiver unit, transceiver device, and transceiver circuit may be used interchangeably; terms such as transmitter, transmitter unit, transmitter device, and transmitter circuit may be used interchangeably; and terms such as receiver, receiver unit, receiver device, and receiver circuit may be used interchangeably.

Optionally, the communication device 7100 further includes one or more interface circuits 7104, which are connected to the memory 7102. The interface circuits 7104 may be configured to receive signals from the memory 7102 or other devices, and may be configured to send signals to the memory 7102 or other devices. For example, the interface circuits 7104 may read instructions stored in the memory 7102 and send the instructions to the processor 7101.

The communication device 7100 described in the above embodiments may be a network device or a terminal, but the scope of the communication device 7100 described in the present disclosure is not limited thereto, and the structure of the communication device 7100 may not be limited to FIG. 7A. The communication device 7100 may be an independent device or part of a larger device. For example, the communication device 7100 may be (1) a stand-alone integrated circuit (IC), or a chip, or a chip system or subsystem; (2) a set of one or more ICs, in which optionally, the set of ICs may further include a storage component for storing data and programs; (3) an ASIC, such as a modem; (4) a module that may be embedded in other devices; (5) a receiver, a terminal, an intelligent terminal, a cellular phone, a wireless device, a handheld device, a mobile unit, an in-vehicle device, a network device, a cloud device, an artificial intelligence device, or the like; or (6) others.

FIG. 7B is a schematic block diagram of a chip 7200 provided in an embodiment of the present disclosure. For the case where the communication device 7100 may be a chip or a chip system, reference may be made to the block diagram of the chip 7200 shown in FIG. 7B, but the present disclosure is not limited thereto.

The chip 7200 includes one or more processors 7201, and the processor 7201 is configured to invoke instructions, so that the chip 7200 executes any one of the above methods.

In some embodiments, the chip 7200 further includes one or more interface circuits 7202, which are connected to the memory 7203. The interface circuits 7202 may be configured to receive signals from the memory 7203 or other devices, and may be configured to send signals to the memory 7203 or other devices. For example, the interface circuits 7202 may read instructions stored in memory 7203 and send the instructions to the processor 7201. Optionally, terms such as interface circuit, interface, transceiver pin, and transceiver may be used interchangeably.

In some embodiments, the chip 7200 further includes one or more memories 7203 for storing instructions. Alternatively, all or some of the memories 7203 may be located outside the chip 7200.

The present disclosure further provides a storage medium, which has stored therein instructions that, when executed on the communication device 7100, cause the communication device 7100 to perform any one of the above methods. Optionally, the above-mentioned storage medium is an electronic storage medium. Optionally, the above-mentioned storage medium is a computer-readable storage medium, but is not limited thereto; and the above-mentioned storage medium may also be a storage medium readable by other devices. Optionally, the above storage medium may be a non-transitory storage medium, but is not limited thereto; and the above-mentioned storage medium may also be a transitory storage medium.

The present disclosure further provides a program product that, when executed by the communication device 7100, causes the communication device 7100 to perform any one of the above methods. Optionally, the above-mentioned program product is a computer program product.

The present disclosure further provides a computer program that, when executed on a computer, causes the computer to perform any one of the above methods.

All or some of the above embodiments may be implemented by software, hardware, firmware or any combination thereof. When implemented using the software, all or some of the above embodiments may be implemented in a form of the computer program product. The computer program product includes one or more computer programs. When the computer program is loaded and executed on the computer, all or some of the processes or functions according to embodiments of the present disclosure will be generated. The computer may be a general-purpose computer, a special-purpose computer, a computer network, or other programmable devices. The computer program may be stored in a computer-readable storage medium, or transmitted from one computer-readable storage medium to another computer-readable storage medium. For example, the computer program may be transmitted from one website, computer, server or data center to another website, computer, server or data center in a wired manner (such as via a coaxial cable, an optical fiber, a digital subscriber line DSL) or a wireless manner (for example, in an infrared, wireless, or microwave manner, or the like). The computer-readable storage medium may be any available medium that may be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc DVD), a semiconductor medium (for example, a solid state disk SSD), or the like.

Those of ordinary skill in the art will appreciate that the units and algorithm steps of each example described in conjunction with the embodiments of the present disclosure may be implemented in electronic hardware, or a combination of computer software and electronic hardware. Whether these functions are performed in hardware or software depends on the specific application and design constraints of the technical solution. Professional technicians may use different methods to implement the described functions for each specific application, but such an implementation should not be understood as extending beyond the scope of the present disclosure.

Those skilled in the art may clearly understand that, for the convenience and brevity of description, regarding the specific working processes of the systems, devices and units described above, reference may be made to the corresponding processes in the above-mentioned method embodiments, which will not be repeated here.

The above are only specific embodiments of the present disclosure, but the protection scope of the present disclosure is not limited thereto. Any person skilled in the art who is familiar with this technical field may easily think of changes or substitutions within the technical scope defined in the present disclosure, which should be included in the protection scope of the present disclosure. Therefore, the protection scope of the present disclosure should be based on the protection scope of the claims.

## Claims

1. A determination method, comprising:
determining a bit width and/or an indication manner of a downlink control information (DCI) indication field based on at least one of a transmission mode, a maximum number of transmission layers or a maximum number of phase tracking reference signal (PTRS) ports in a case where a transmission scheme is performing, by a physical uplink shared channel (PUSCH), a multi-transmission reception point (MTRP) transmission in an uplink simultaneous transmission across multiple panels (STxMP) configuration scenario, wherein the DCI indication field indicates an association relationship between ports.

2. The method according to claim 1, wherein the MTRP transmission in the STxMP configuration scenario comprises simultaneously performing, by two antenna panels of a terminal, PUSCH transmissions to two different transmission reception point (TRP) directions, wherein the PUSCH transmissions in different TRP directions are associated with different sets of sounding reference signal (SRS) resources and different transmission configuration indication states (TCI states).

3. The method according to claim 1, wherein the transmission mode comprises a space division multiplexing (SDM) transmission or a single frequency network (SFN) transmission.

4. The method according to claim 1, wherein the association relationship between the ports comprises an association relationship between a PTRS port and a demodulation reference signal (DMRS) port.

5. The method according to any one of claims 1 to 4, further comprising:
determining an execution of the MTRP transmission based on an SRS resource set indicator (SRI) field in a DCI signaling.

6. The method according to any one of claims 1 to 5, further comprising:
determining the transmission mode of the MTRP transmission to be an SDM transmission or an SFN transmission based on a radio resource control (RRC) signaling.

7. The method according to any one of claims 1 to 6, wherein the maximum number of transmission layers is the maximum number of transmission layers corresponding to each SRS resource set, each TRP, each antenna panel, or each TCI state; and the maximum number of PTRS ports is the maximum number of PTRS ports sent by a terminal, wherein the number of PTRS ports corresponding to different SRS resource sets, different TRPs, different antenna panels, or different TCI states from the terminal is identical.

8. The method described in any one of claims 1 to 7, wherein in a case where the transmission mode is an SDM transmission, the maximum number of PTRS ports is 2, the actual number of PTRS ports sent by a terminal is 2, each SRS resource set, each TRP, each antenna panel, or each TCI state corresponds to one PTRS port, and different SRS resource sets, different TRPs, different antenna panels, or different TCI states correspond to different PTRS ports for transmissions.

9. The method according to any one of claims 1 to 8, wherein determining the bit width and/or the indication manner of the DCI indication field based on at least one of the transmission mode, the maximum number of transmission layers, or the maximum number of PTRS ports comprises:
in a case where the transmission mode is an SDM transmission and the maximum number of transmission layers configured for the SDM transmission is 1, an actual number of PTRS ports sent by a terminal being 2, determining the bit width and/or the indication manner of the DCI indication field being any one of:
the bit width of the DCI indication field being 0 bits;
the bit width of the DCI indication field being 2 bits, a most significant bit (MSB) of the DCI indication field indicating a DMRS port associated with a PTRS port 0 corresponding to a first SRS resource set, a first TRP, a first antenna panel, or a first TCI state in the STxMP configuration scenario; a least significant bit (LSB) of the DCI indication field indicating a DMRS port associated with a PTRS port 1 corresponding to a second SRS resource set, a second TRP, a second antenna panel, or a second TCI state in the STxMP configuration scenario; or
the bit width of the DCI indication field being 1 bit, the DCI indication field indicating an DMRS port associated with a PTRS port corresponding to an SRS resource set, a TRP, an antenna panel, or a TCI state in the STxMP configuration scenario.

10. The method according to any one of claims 1 to 9, wherein determining the bit width and/or the indication manner of the DCI indication field based on at least one of the transmission mode, the maximum number of transmission layers, or the maximum number of PTRS ports comprises:
in a case where the transmission mode is an SDM transmission and the maximum number of transmission layers configured for the SDM transmission is 2, an actual number of PTRS ports sent by a terminal being 2, determining an actual number of transmission layers corresponding to each SRS resource set, each TRP, each antenna panel, or each TCI state;
in a case where the actual number of transmission layers corresponding to each SRS resource set, each TRP, each antenna panel, or each TCI state is 2, determining the bit width of the DCI indication field to be 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 1 corresponding to a second SRS resource set, a second TRP, a second antenna panel, or a second TCI state in the STxMP configuration scenario;
in a case where the actual number of transmission layers corresponding to each SRS resource set, each TRP, each antenna panel, or each TCI state is 1, determining the bit width and/or the indication manner of the DCI indication field being any one of:
the bit width of the DCI indication field being 0 bits;
the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 1 corresponding to a second SRS resource set, a second TRP, a second antenna panel, or a second TCI state in the STxMP configuration scenario; or
the bit width of the DCI indication field being 1 bit, the DCI indication field indicating a DMRS port associated with a PTRS port corresponding to an SRS resource set, a TRP, an antenna panel, or a TCI state in the STxMP configuration scenario;
in a case where the actual number of transmission layers corresponding to a first SRS resource set, a first TRP, a first antenna panel, or a first TCI state is 1, and an actual number of transmission layers corresponding to a second SRS resource set, a second TRP, a second antenna panel, or a second TCI state is 2; or in a case where an actual number of transmission layers corresponding to a first SRS resource set, a first TRP, a first antenna panel, or a first TCI state is 2, and an actual number of transmission layers corresponding to a second SRS resource set, a second TRP, a second antenna panel, or a second TCI state is 1, determining the bit width and/or the indication manner of the DCI indication field being any one of:
the bit width of the DCI indication field being 2 bits, an MSB of the DCI indication field indicating a DMRS port associated with a PTRS port 0 corresponding to the first SRS resource set, the first TRP, the first antenna panel, or the first TCI state in the STxMP configuration scenario, an LSB of the DCI indication field indicating a DMRS port associated with a PTRS port 1 corresponding to the second SRS resource set, the second TRP, the second antenna panel, or the second TCI state in the STxMP configuration scenario; or
the bit width of the DCI indication field being 1 bit, the DCI indication field indicating a DMRS port associated with a PTRS port corresponding to an SRS resource set with an actual number of transmission layers of 2, a TRP with an actual number of transmission layers of 2, an antenna panel with an actual number of transmission layers of 2, or a TCI state with an actual number of transmission layers of 2.

11. The method according to any one of claims 1 to 10, wherein in a case where the transmission mode is an SFN transmission, a numeric count of PTRS ports corresponding to different SRS resource sets, different TRPs, different antenna panels, or different TCI states is identical, and the same PTRS port corresponding to different SRS resource sets, different TRPs, different antenna panels, or different TCI states is associated with the same DMRS port or different DMRS ports.

12. The method according to any one of claims 1 to 11, wherein determining the bit width and/or the indication manner of the DCI indication field based on at least one of the transmission mode, the maximum number of transmission layers, or the maximum number of PTRS ports comprises:
in a case where the transmission mode is an SFN transmission, the maximum number of transmission layers configured for the SFN transmission is 1, and the maximum number of PTRS ports configured for the SFN transmission is 1, an actual number of PTRS ports sent by a terminal being 1, determining the bit width and/or the indication manner of the DCI indication field being any one of:
the bit width of the DCI indication field being 0 bits;
the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 0 corresponding to a second SRS resource set, a second TRP, a second antenna panel, or a second TCI state in the STxMP configuration scenario; or
the bit width of the DCI indication field being 1 bit, the DCI indication field indicating a DMRS port associated with a PTRS port corresponding to an SRS resource set, a TRP, an antenna panel, or a TCI state in the STxMP configuration scenario.

13. The method according to any one of claims 1 to 12, wherein determining the bit width and/or the indication manner of the DCI indication field based on at least one of the transmission mode, the maximum number of transmission layers, or the maximum number of PTRS ports comprises:
in a case where the transmission mode is an SFN transmission, the maximum number of transmission layers configured for the SFN transmission is 2, and the maximum number of PTRS ports configured for the SFN transmission is 1, an actual number of PTRS ports sent by a terminal being 1, determining an actual number of transmission layers for each SRS resource set, each TRP, each antenna panel, or each TCI state;
in a case where the actual number of transmission layers corresponding to each SRS resource set, each TRP, each antenna panel, or each TCI state is 1, determining the bit width and/or the indication manner of the DCI indication field being any one of:
the bit width of the DCI indication field being 0 bits;
the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 0 corresponding to a second SRS resource set, a second TRP, a second antenna panel, or a second TCI state in the STxMP configuration scenario; or
the bit width of the DCI indication field being 1 bit, the DCI indication field indicating a DMRS port associated with a PTRS port corresponding to an SRS resource set, a TRP, an antenna panel, or a TCI state in the STxMP configuration scenario;
in a case where the actual number of transmission layers corresponding to each SRS resource set, each TRP, each antenna panel, or each TCI state is 2, determining the bit width and/or the indication manner of the DCI indication field being any one of:
the bit width of the DCI indication field being 1 bit, the DCI indication field indicating a DMRS port associated with a PTRS port corresponding to an SRS resource set, a TRP, an antenna panel, or a TCI state in the STxMP configuration scenario; or
the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 0 corresponding to a second SRS resource set, a second TRP, a second antenna panel, or a second TCI state in the STxMP configuration scenario.

14. The method according to claim 13, wherein in a case where the transmission mode is the SFN transmission, the maximum number of transmission layers configured for the SFN transmission is 2, the maximum number of PTRS ports configured for the SFN transmission is 1, and the actual number of PTRS ports sent by the terminal is 1, and in a case where the actual number of transmission layers corresponding to each SRS resource set, each TRP, each antenna panel, or each TCI state is 2, the same PTRS port corresponding to different SRS resource sets, different TRPs, different antenna panels, or different TCI states is associated with different DMRS ports, or the same PTRS port corresponding to different SRS resource sets, different TRPs, different antenna panels, or different TCI states is associated with the same DMRS port.

15. The method according to any one of claims 1 to 14, wherein determining the bit width and/or the indication manner of the DCI indication field based on at least one of the transmission mode, the maximum number of transmission layers, or the maximum number of PTRS ports comprises:
in a case where the transmission mode is an SFN transmission, the maximum number of transmission layers configured for the SFN transmission is 2, and the maximum number of PTRS ports configured for the SFN transmission is 2, determining an actual number of PTRS ports sent by a terminal;
in a case where the actual number of PTRS ports sent by the terminal is 1, determining an actual number of transmission layers for each SRS resource set, each TRP, each antenna panel, or each TCI state;
in a case where the actual number of transmission layers corresponding to each SRS resource set, each TRP, each antenna panel, or each TCI state is 1, determining the bit width and/or the indication manner of the DCI indication field being any one of:
the bit width of the DCI indication field being 0 bits;
the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 0 corresponding to a second SRS resource set, a second TRP, a second antenna panel, or a second TCI state in the STxMP configuration scenario; or
the bit width of the DCI indication field being 1 bit, the DCI indication field indicating a DMRS port associated with a PTRS port 0 corresponding to an SRS resource set, a TRP, an antenna panel, or a TCI state in the STxMP configuration scenario;
in a case where an actual number of transmission layers corresponding to each SRS resource set, each TRP, each antenna panel, or each TCI state is 2, and the same PTRS port corresponding to different SRS resource sets, different TRPs, different antenna panels, or different TCI states is associated with the same DMRS port, determining the bit width and/or the indication manner of the DCI indication field being any one of:
the bit width of the DCI indication field being 1 bit, the DCI indication field indicating a DMRS port associated with a PTRS port corresponding to an SRS resource set, a TRP, an antenna panel, or a TCI state in the STxMP configuration scenario; or
the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 0 corresponding to a second SRS resource set, a second TRP, a second antenna panel, or a second TCI state in the STxMP configuration scenario;
in a case where the actual number of transmission layers corresponding to each SRS resource set, each TRP, each antenna panel, or each TCI state is 2, and the same PTRS port corresponding to different SRS resource sets, different TRPs, different antenna panels, or different TCI states is associated with different DMRS ports, determining the bit width and/or the indication manner of the DCI indication field being any one of:
the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating another DMRS port associated with the PTRS port 0 corresponding to a second SRS resource set, a second TRP, a second antenna panel, or a second TCI state in the STxMP configuration scenario; or
the bit width of the DCI indication field being 1 bit, the DCI indication field indicating a DMRS port associated with a PTRS port corresponding to an SRS resource set, a TRP, an antenna panel, or a TCI state in the STxMP configuration scenario.

16. The method according to any one of claims 1 to 15, wherein determining the bit width and/or the indication manner of the DCI indication field based on at least one of the transmission mode, the maximum number of transmission layers, or the maximum number of PTRS ports comprises:
in a case where the transmission mode is an SFN transmission, the maximum number of transmission layers configured for the SFN transmission is 2, and the maximum number of PTRS ports configured for the SFN transmission is 2, determining an actual number of PTRS ports sent by a terminal;
in a case where the actual number of PTRS ports sent by the terminal is 2, and the same PTRS port corresponding to different SRS resource sets, different TRPs, different antenna panels, or different TCI states is associated with the same DMRS port, determining the bit width and/or the indication manner of the DCI indication field being any one of:
the bit width of the DCI indication field being 1 bit, the DCI indication field indicating a DMRS port associated with a PTRS port corresponding to an SRS resource set, a TRP, an antenna panel, or a TCI state in the STxMP configuration scenario;
the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 1 corresponding to the first SRS resource set, the first TRP, the first antenna panel, or the first TCI state in the STxMP configuration scenario;
the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 0 corresponding to a second SRS resource set, a second TRP, a second antenna panel, or a second TCI state in the STxMP configuration scenario; or
the bit width of the DCI indication field being 4 bits, first two bits of the DCI indication field indicating DMRS ports associated with two PTRS ports corresponding to a first SRS resource set, a first TRP, a first antenna panel, or a first TCI state in the STxMP configuration scenario; last two bits of the DCI indication field indicating DMRS ports associated with two PTRS ports corresponding to a second SRS resource set, a second TRP, a second antenna panel, or a second TCI state in the STxMP configuration scenario.

17. The method according to claim 16, wherein determining the bit width and/or the indication manner of the DCI indication field based on at least one of the transmission mode, the maximum number of transmission layers, or the maximum number of PTRS ports comprises:
in a case where the transmission mode is an SFN transmission, the maximum number of transmission layers configured for the SFN transmission is 2, and the maximum number of PTRS ports configured for the SFN transmission is 2, determining an actual number of PTRS ports sent by a terminal;
in a case where the actual number of PTRS ports sent by the terminal is 2, and the same PTRS port corresponding to different SRS resource sets, different TRPs, different antenna panels, or different TCI states is associated with different DMRS ports, determining the bit width and/or the indication manner of the DCI indication field being any one of:
the bit width of the DCI indication field being 2 bits, an MSB of the DCI indication field indicating a DMRS port associated with a PTRS port 0 corresponding to a first SRS resource set, a first TRP, a first antenna panel, or a first TCI state in the STxMP configuration scenario, an LSB of the DCI indication field indicating a DMRS port associated with a PTRS port 0 corresponding to a second SRS resource set, a second TRP, a second antenna panel, or a second TCI state in the STxMP configuration scenario; or
the bit width of the DCI indication field being 4 bits, first two bits of the DCI indication field indicating DMRS ports associated with two PTRS ports corresponding to a first SRS resource set, a first TRP, a first antenna panel, or a first TCI state in the STxMP configuration scenario; last two bits of the DCI indication field indicating DMRS ports associated with two PTRS ports corresponding to a second SRS resource set, a second TRP, a second antenna panel, or a second TCI state in the STxMP configuration scenario.

18. The method according to claim 15, 16, or 17, wherein determining the actual number of PTRS ports sent by the terminal comprises:
determining a target SRS resource set, a target TRP, a target antenna panel, or a target TCI state from two SRS resource sets, two TRPs, two antenna panels, or two TCI states based on at least one of a predefined rule, a network configuration, or a network indication;
determining the actual number of PTRS ports for the target SRS resource set, the target TRP, the target antenna panel, or the target TCI state as the actual number of PTRS ports sent by the terminal.

19. The method according to claim 18, further comprising:
in a case where the SFN transmission is performed based on a codebook, determining the actual number of PTRS ports for the target SRS resource set, the target TRP, the target antenna panel, or the target TCI state based on a transmitted precoding matrix indicator (TPMI) configured by a network device for the target SRS resource set, the target TRP, the target antenna panel, or the target TCI state;
in a case where the SFN transmission is performed based on a non-codebook, determining the actual number of PTRS ports for the target SRS resource set, the target TRP, the target antenna panel, or the target TCI state based on a PTRS index indicated by an SRI field corresponding to the target SRS resource set, the target TRP, the target antenna panel, or the target TCI state in a DCI signaling.

20. A determination method, performed by a communication system, the communication system comprising a terminal and a network device, the method comprising at least one of:
determining, by the network device, a bit width and/or an indication manner of a first downlink control information (DCI) indication field based on at least one of a transmission mode, a maximum number of transmission layers or a maximum number of phase tracking reference signal (PTRS) ports in a case where a transmission scheme is performing, by a physical uplink shared channel (PUSCH), a multi-transmission reception point (MTRP) transmission in a STxMP configuration scenario, wherein the DCI indication field indicates an association relationship between ports;
determining, by the terminal, a bit width and/or an indication manner of a first DCI indication field based on at least one of a transmission mode, a maximum number of transmission layers, or a maximum number of PTRS ports in a case where a transmission scheme is performing, by a PUSCH, an MTRP transmission in an uplink STxMP configuration scenario, wherein the DCI indication field indicates an association relationship between ports.

21. An apparatus, comprising:
a determination module configured to determine a bit width and/or an indication manner of a first downlink control information (DCI) indication field based on at least one of a transmission mode, a maximum number of transmission layers or a maximum number of phase tracking reference signal (PTRS) ports in a case where a transmission scheme is performing, by a physical uplink shared channel (PUSCH), a multi-transmission reception point (MTRP) transmission in an uplink simultaneous transmission across multiple panels (STxMP) configuration scenario, wherein the DCI indication field indicates an association relationship between ports.

22. A communication device, comprising:
one or more processors,
wherein the one or more processors are configured to invoke instructions to cause the communication device to perform the determination method according to any one of claims 1 to 19.

23. A communication system, comprising:
a terminal configured to implement the determination method according to any one of claims 1 to 15; and
a network device configured to implement the determination method according to any one of claims 1 to 19.

24. A storage medium for storing instructions that, when executed on a communication device, cause the communication device to perform the determination method according to any one of claims 1 to 19.
